(19) Europäisches Patentamt
European Patent Office
Office européen des brevets

(11) EP 4 219 574 A1

(12) EUROPEAN PATENT APPLICATION
published in accordance with Art. 153(4) EPC

(43) Date of publication:
**02.08.2023 Bulletin 2023/31**

(21) Application number: **21872528.1**

(22) Date of filing: **24.09.2021**

(51) International Patent Classification (IPC):
***C08F 297/04*** *(2006.01)* ***C08L 53/02*** *(2006.01)*
***C08L 101/00*** *(2006.01)* ***C08K 3/013*** *(2018.01)*

(52) Cooperative Patent Classification (CPC):
**C08F 297/04; C08K 3/013; C08L 53/02; C08L 101/00**

(86) International application number:
**PCT/JP2021/034941**

(87) International publication number:
**WO 2022/065399 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2020 JP 2020160966**

(71) Applicant: **Kuraray Co., Ltd.**
**Kurashiki-shi, Okayama 710-0801 (JP)**

(72) Inventor: **SHIMIZU, Seiya**
**Kamisu-shi, Ibaraki 314-0197 (JP)**

(74) Representative: **Müller-Boré & Partner Patentanwälte PartG mbB**
**Friedenheimer Brücke 21**
**80639 München (DE)**

# (54) RESIN COMPOSITION AND MOLDED ARTICLE

(57) A resin composition enhanced in impact resistance and heat shock resistance is provided that includes at least one thermoplastic resin selected from the group consisting of polybutylene terephthalate resins, polystyrene resins, and polyphenylene sulfide resins. A shaped article obtained from the resin composition is also provided. The resin composition includes 100 parts by mass of a thermoplastic resin (A); and 1 to 100 parts by mass of a multibranched block copolymer or a hydrogenated product thereof (B) wherein the multibranched block copolymer contains a polymer block (b1) including aromatic vinyl compound-derived structural units, and a polymer block (b2) including conjugated diene compound-derived structural units, wherein the thermoplastic resin (A) includes at least one selected from the group consisting of polybutylene terephthalate resins (A-1), polystyrene resins (A-2), and polyphenylene sulfide resins (A-3); and the multibranched block copolymer or the hydrogenated product thereof (B) includes at least one selected from the group consisting of star block copolymers or hydrogenated products thereof (B-1) wherein the star block copolymers include 3 or more chains (b$\alpha$) each containing a polymer block (b1) including aromatic vinyl compound-derived structural units, and a polymer block (b2) including conjugated diene compound-derived structural units, and one nucleus (b$\beta$) derived from a coupling agent; and graft block copolymers or hydrogenated products thereof (B-2) wherein the graft block copolymers include a main chain (b$\gamma$) including conjugated diene compound-derived structural units, and a side chain (b$\delta$) containing a polymer block (b1) including aromatic vinyl compound-derived structural units, and a polymer block (b2) including conjugated diene compound-derived structural units.

EP 4 219 574 A1

## Description

Technical Field

The present invention relates to a resin composition that includes a thermoplastic resin and a multibranched block copolymer or a hydrogenated product thereof, and to a shaped article obtained from the resin composition.

Background Art

Thermoplastic resins including polybutylene terephthalate resins, polystyrene resins, and polyphenylene sulfide resins have found increased use in various applications, such as automobiles, and electric and electronic parts, in the form of shaped articles of the resins depending on their characteristics. For example, studies are underway to use these resins as shaped articles including an inorganic member and a resin member. One example is insert molding of the resin together with a member made of an inorganic material.

The applications of such shaped articles have extended to electric and electronic parts, and also to improved technologies of electric vehicles in the automobile field. These and other facts increasingly demand that the shaped articles be further enhanced not only in impact resistance but also in heat shock resistance over the conventional levels. A traditional approach to imparting impact resistance and heat shock resistance to thermoplastic resins is to add impact resistance modifier components and heat shock resistance modifier components including rubber compositions.

For example, Patent Literature 1 is aimed at enhancements including enhancement of heat shock resistance through consideration of a polybutylene terephthalate resin composition prepared by blending a specific polybutylene terephthalate resin, a specific styrenic thermoplastic elastomer, and glass fibers.

Furthermore, Patent Literature 2 is aimed at enhancements including enhancement of long-term heat resistance through consideration of a polyarylene sulfide resin composition essentially containing a polyarylene sulfide resin, a bisphenol epoxy resin, an oxazoline group-containing amorphous polymer, and an impact resistance modifier resin.

Citation List

Patent Literature

Patent Literature 1: JP-A-2009-155447
Patent Literature 2: JP-A-2000-103964

Summary of Invention

Technical Problem

Unfortunately, the techniques of Patent Literatures 1 and 2 still have room for improvement in terms of enhancing the heat shock resistance of the resin composition while maintaining the impact resistance.

The present invention has been made in light of the circumstances discussed above. Objects of the present invention are therefore to provide a resin composition enhanced in impact resistance and heat shock resistance that includes at least one thermoplastic resin selected from the group consisting of polybutylene terephthalate resins, polystyrene resins, and polyphenylene sulfide resins, and to provide a shaped article obtained from the resin composition.

Solution to Problem

After extensive studies, the present inventors have found that a resin composition that includes at least one thermoplastic resin selected from the group consisting of polybutylene terephthalate resins, polystyrene resins, and polyphenylene sulfide resins, and a specific multibranched block copolymer or a hydrogenated product thereof attains excellent impact resistance and heat shock resistance. The present invention has been completed based on the finding.

Specifically, the present invention provides the following [1] to [12].

[1] A resin composition comprising:

100 parts by mass of a thermoplastic resin (A); and
1 to 100 parts by mass of a multibranched block copolymer or a hydrogenated product thereof (B) wherein the multibranched block copolymer contains a polymer block (b1) including aromatic vinyl compound-derived structural units, and a polymer block (b2) including conjugated diene compound-derived structural units, wherein

the thermoplastic resin (A) comprises:
at least one selected from the group consisting of polybutylene terephthalate resins (A-1), polystyrene resins (A-2), and polyphenylene sulfide resins (A-3), and
the multibranched block copolymer or the hydrogenated product thereof (B) comprises at least one selected from the group consisting of:

star block copolymers or hydrogenated products thereof (B-1) wherein the star block copolymers include 3 or more chains (bα) each containing a polymer block (b1) including aromatic vinyl compound-derived structural units, and a polymer block (b2) including conjugated diene compound-derived structural units, and one nucleus (bβ) derived from a coupling agent; and
graft block copolymers or hydrogenated products thereof (B-2) wherein the graft block copolymers include a main chain (bγ) including conjugated diene compound-derived structural units, and a side chain (bδ) containing a polymer block (b1) including aromatic vinyl compound-derived structural units, and a polymer block (b2) including conjugated diene compound-derived structural units.

[2] The resin composition described in [1], wherein the thermoplastic resin (A) comprises a polybutylene terephthalate resin (A-1).
[3] The resin composition described in [1], wherein the thermoplastic resin (A) comprises a polystyrene resin (A-2).
[4] The resin composition described in [1], wherein the thermoplastic resin (A) comprises a polyphenylene sulfide resin (A-3).
[5] The resin composition described in any of [1] to [4], wherein the conjugated diene compound-derived structural units in the multibranched block copolymer or the hydrogenated product thereof (B) comprise isoprene-derived units.
[6] The resin composition described in any of [1] to [5], wherein the multibranched block copolymer or the hydrogenated product thereof (B) has a number average molecular weight of 700,000 or more as measured by gel permeation chromatography relative to standard polystyrenes.
[7] The resin composition described in any of [1] to [6], wherein the multibranched block copolymer or the hydrogenated product thereof (B) is at least one hydrogenated multibranched block copolymer (B2) selected from the group consisting of:

hydrogenated star block copolymers (B-1-2) obtained from star block copolymers including 3 or more chains (bα) each containing a polymer block (b1) including aromatic vinyl compound-derived structural units, and a polymer block (b2) including conjugated diene compound-derived structural units, and one nucleus (bβ) derived from a coupling agent; and
hydrogenated graft block copolymers (B-2-2) obtained from graft block copolymers including a main chain (bγ) including conjugated diene compound-derived structural units, and a side chain (bδ) containing a polymer block (b1) including aromatic vinyl compound-derived structural units, and a polymer block (b2) including conjugated diene compound-derived structural units, and
the hydrogenated multibranched block copolymer is such that the multibranched block copolymer is hydrogenated at a hydrogenation ratio of 80 mol% or more of carbon-carbon double bonds in the conjugated diene compound-derived structural units present in the multibranched block copolymer.

[8] The resin composition described in [7], wherein the multibranched block copolymer or the hydrogenated product thereof (B) is a hydrogenated star block copolymer (B-1-2) obtained from a star block copolymer including 3 or more chains (bα) each containing a polymer block (b1) including aromatic vinyl compound-derived structural units, and a polymer block (b2) including conjugated diene compound-derived structural units, and one nucleus (bβ) derived from a coupling agent, and
the hydrogenated star block copolymer is such that the star block copolymer is hydrogenated at a hydrogenation ratio of 80 mol% or more of carbon-carbon double bonds in the conjugated diene compound-derived structural units present in the star block copolymer.
[9] The resin composition described in [1], wherein the multibranched block copolymer or the hydrogenated product thereof (B) comprises a star block copolymer or a hydrogenated product thereof (B-1), and
the nucleus (bβ) contained in the star block copolymer or the hydrogenated product thereof (B-1) is derived from divinylbenzene.
[10] The resin composition described in any of [1] to [9], further comprising 1 to 200 parts by mass of an inorganic filler (C) with respect to 100 parts by mass of the thermoplastic resin (A).
[11] A shaped article obtained from the resin composition described in any of [1] to [10].
[12] The shaped article described in [11], which comprises an inorganic member formed of at least one selected from the group consisting of metals and non-metallic inorganic solids, and a resin member formed from the resin

composition described in any of [1] to [10] and covering at least part of a surface of the inorganic member.

Advantageous Effects of Invention

The resin composition according to the present invention includes at least one thermoplastic resin selected from the group consisting of polybutylene terephthalate resins, polystyrene resins, and polyphenylene sulfide resins, and exhibits enhanced impact resistance and heat shock resistance. A shaped article is obtained from the resin composition.

Description of Embodiments

Hereinbelow, the present invention will be described in detail.

<Thermoplastic resins (A)>

A resin composition of the present invention includes a thermoplastic resin (A). The thermoplastic resin (A) comprises at least one selected from the group consisting of polybutylene terephthalate resins (A-1), polystyrene resins (A-2), and polyphenylene sulfide resins (A-3). The thermoplastic resins (A) exclude any resins other than the polybutylene terephthalate resins (A-1), the polystyrene resins (A-2), and the polyphenylene sulfide resins (A-3).

<Polybutylene terephthalate resins (A-1)>

The polybutylene terephthalate resins (A-1) used in the present invention are polymers obtained by polycondensation of terephthalic acid and/or an ester-forming derivative thereof, and 1,4-butanediol and/or an ester-forming derivative thereof. Examples of the ester-forming derivatives of terephthalic acid include alkyl esters of terephthalic acid, such as dimethyl terephthalate. Examples of the ester-forming derivatives of 1,4-butanediol include alkyl esters of diols, such as 1,4-butanediol esters.
The terephthalic acid or the ester-forming derivative thereof may be copolymerized with other dicarboxylic acid or an ester-forming derivative thereof as long as characteristics are not impaired. Furthermore, the 1,4-butanediol or the ester-forming derivative thereof may be copolymerized with other diol or an ester-forming derivative thereof.
Examples of the dicarboxylic acids or the ester-forming derivatives thereof used as comonomer components include isophthalic acid, adipic acid, oxalic acid, sebacic acid, decanedicarboxylic acid, naphthalenedicarboxylic acid, and alkyl esters of these dicarboxylic acids.
These compounds may be used singly, or two or more may be used in combination.
Examples of the diols or the ester-forming derivatives thereof used as comonomer components include ethylene glycol, propylene glycol, neopentyl glycol, 1,5-pentanediol, 1,6-hexanediol, decamethylene glycol, cyclohexanedimethanol, cyclohexanediol, long-chain glycols having a molecular weight of 400 to 6000, such as polyethylene glycol, poly-1,3-propylene glycol, and polytetramethylene glycol, and fatty acid esters of these diols.
These compounds may be used singly, or two or more may be used in combination.
The comonomer component(s) is preferably used in an amount of 20 wt% or less of the raw materials for forming the polybutylene terephthalate resin (A-1).
Preferred examples of the copolymers used as the polybutylene terephthalate resins (A-1) include, for example, polybutylene (terephthalate/isophthalate), polybutylene (terephthalate/adipate), polybutylene (terephthalate/sebacate), polybutylene (terephthalate/decanedicarboxylate), polybutylene (terephthalate/naphthalate), and poly(butylene/ethylene) terephthalate.
These copolymers may be used singly, or two or more may be used in combination. Furthermore, polybutylene terephthalate (homopolymer) may be used singly, or the homopolymer may be used in combination with two or more of the copolymers described above.
Among the polybutylene terephthalate resins (A-1), polybutylene terephthalate is preferable.

<Polystyrene resins (A-2)>

Examples of the polystyrene resins (A-2) used in the present invention include polyalkylstyrenes, such as polystyrene, polymethylstyrene, polydimethylstyrene, and poly-t-butylstyrene; polyhalostyrenes, such as polychlorostyrene, polybromostyrene, polyfluorostyrene, and polyfluorostyrene; polyhaloalkylstyrenes, such as polychloromethylstyrene; polyalkoxystyrenes, such as polymethoxystyrene and polyethoxystyrene; polycarboxyalkylstyrenes, such as polycarboxymethylstyrene; poly alkyl ether styrenes, such as poly vinylbenzyl propyl ether; polyalkylsilylstyrenes, such as polytrimethylsilylstyrene; and poly(vinylbenzyl dimethoxyphosphide) .

Among the polystyrene resins (A-2), polystyrene is preferable.

<Polyphenylene sulfide resins (A-3)>

The polyphenylene sulfide (hereinafter, abbreviated as "PPS") resins (A-3) used in the present invention may be resins generally treated as PPS resins. Usually, the resins have, as the principal structural units, repeating units represented by the general formula (1) [-Ar-S-] (in the formula (1), -Ar- denotes a divalent aromatic group containing at least one six-membered carbon ring). In particular, resins that contain 70 mol% or more of the structural units represented by the general formula (1) are preferable because of excellent heat resistance and chemical resistance.

Among the resins that contain 70 mol% or more of the structural units represented by the general formula (1), PPS resins that have repeating units represented by the general formula (2) [-φ-S-] (in the formula (2), -φ- denotes a p-phenylene group) are particularly preferable. In particular, PPS resins that contain 70 mol% or more of the repeating units represented by the general formula (2) are preferable because such resins have sufficient strength, and excellent toughness and chemical resistance.

In the PPS resins (A-3), the structural units represented by the general formula (1) may be copolymerized with, for example, structural units represented by the chemical formulas below that contain, for example, a meta bond, an ether bond, a sulfone bond, a sulfide ketone bond, a biphenyl bond, a substituted phenyl sulfide bond, a trifunctional phenyl sulfide, or a naphthyl bond. The content of such comonomer components is preferably less than 30 mol%. When the comonomer components include structural units containing three or more bonds, the content of such comonomer components is preferably 5 mol% or less, particularly 3 mol% or less.

[Chem. 1]

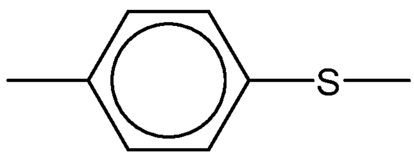

[Chem. 2]

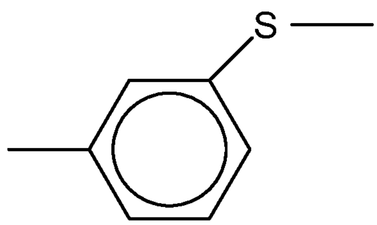

[Chem. 3]

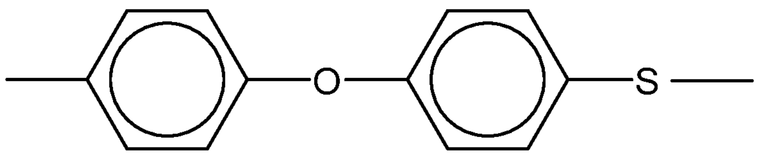

[Chem. 4]

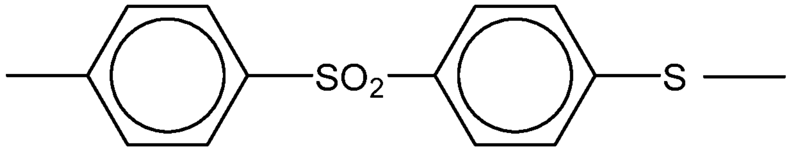

[Chem. 5]

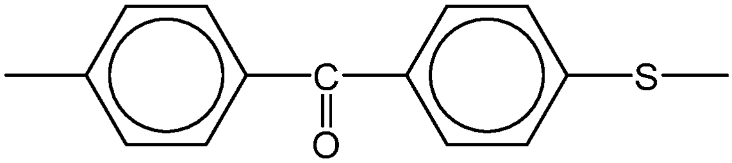

[Chem. 6]

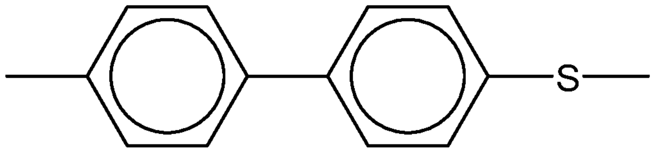

[Chem. 7]

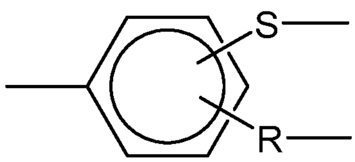

(In the above formula, R denotes an alkyl group, a nitro group, a phenyl group, or an alkoxy group.)

[Chem. 8]

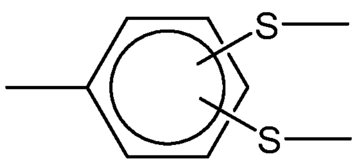

[Chem. 9]

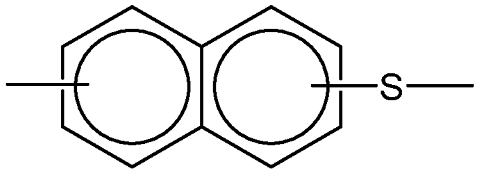

The PPS resins (A-3) used in the present invention may have a molecular structure that is substantially linear and is free from branches or crosslinks, or may have a structure having branches or crosslinks. From points of view such as reactivity and compatibility, the resins preferably have a substantially linear structure.

The PPS resins (A-3) may be obtained by any polymerization method without limitation. Nucleophilic substitution reaction is available for the polymerization. In a method (1), a halogen-substituted aromatic compound may be reacted with an alkali sulfide. Specific examples include:

Method (1)-1: p-Dichlorobenzene is polymerized in the presence of sulfur and sodium carbonate.
Method (1)-2: p-Dichlorobenzene is reacted with sodium sulfide in a polar solvent.
Method (1)-3: p-Dichlorobenzene is reacted with sodium hydrosulfide and sodium hydroxide in a polar solvent.
Method (1)-4: p-Dichlorobenzene is polymerized in the presence of hydrogen sulfide and sodium hydroxide in a polar solvent. In a method (2), a thiophenol, such as p-chlorothiophenol, may be self-condensed in the presence of an alkali catalyst, such as potassium carbonate or sodium carbonate, or a copper salt, such as copper iodide. Examples of the polar solvents that may be used in the method (1) include amide solvents, such as N-methylpyrrolidone and dimethylacetamide, and sulfolane.

Furthermore, the polymerization may be performed by electrophilic substitution reaction. In a method (3), for example, an aromatic compound, such as benzene, may be condensed with sulfur chloride in the presence of a Lewis acid catalyst by Friedel-Crafts reaction.

Among the methods described above, the method (1)-2 is particularly preferable because the PPS resin (A-3) is obtained with a high molecular weight and in a high yield. Specifically, the most appropriate method is such that sodium sulfide and p-dichlorobenzene are reacted in an amide solvent, such as N-methylpyrrolidone or dimethylacetamide, or in a sulfone solvent, such as sulfolane. The method (1)-2 preferably involves the addition of an alkali metal salt of a carboxylic acid or a sulfonic acid, or the addition of an alkali hydroxide to adjust the degree of polymerization.

Furthermore, the PPS resins (A-3) preferably have a substantially linear structure from points of view such as reactivity and compatibility. The PPS resin having a substantially linear structure may be produced by any method without limitation. Examples of the production methods include a method in which an alkali metal sulfide, a dihalogenated aromatic compound, and an organic alkali metal carboxylic acid salt, such as lithium acetate, are reacted in an organic amide solvent, such as N-methylpyrrolidone or dimethylacetamide; and a water-addition two-stage polymerization method in which an alkali metal sulfide and a dihalogenated aromatic compound are reacted in an organic amide solvent while adding a large amount of water and increasing the polymerization temperature at the same time in the course of the polymerization reaction.

Particularly preferably, the PPS resins with a substantially linear structure that are suitably used in the present invention are washed after acid treatment.

The acid used for this acid treatment is not particularly limited as long as the acid does not act to decompose the PPS resin. Examples include acetic acid, hydrochloric acid, sulfuric acid, phosphoric acid, silicic acid, carbonic acid, and propylic acid. In particular, acetic acid and hydrochloric acid are preferably used. In an exemplary acid treatment method, the PPS resin may be submerged in an acid or an aqueous acid solution. During this process, stirring or heating may be performed as required. When, for example, the acid treatment is conducted using acetic acid, sufficient effects may be obtained by submerging the PPS resin in a pH 4 aqueous solution heated at 80 to 90°C, and performing stirring for 30 minutes. The acid-treated PPS resin is preferably washed with water or warm water several times to physically remove residues, such as the acid or salts. The water used here is preferably distilled water or deionized water.

The PPS resin that is subjected to the acid treatment may be powdery particles of the PPS resin, or may be the slurry of the PPS resin directly after the polymerization.

The resin composition of the present invention includes a multibranched block copolymer or a hydrogenated product thereof (B). The multibranched block copolymer contains a polymer block (b1) including aromatic vinyl compound-derived structural units, and a polymer block (b2) including conjugated diene compound-derived structural units.

In the present invention, the multibranched block copolymer means a copolymer that has a plurality of polymer blocks and is such that the polymer blocks, or a chain having the polymer blocks and another polymer chain are bonded to each other without being interrupted by a branching point, or are bonded to each other via a branching point directly or indirectly. Here, the phrase "bonded to each other via a branching point directly" means that each polymer block (or polymer chain) is directly bonded to the branching point, and the phrase "bonded to each other via a branching point indirectly" means that at least one polymer block (or polymer chain) is bonded to the branching point through a linking chain.

Specifically, the phrase "directly bonded to the branching point" means that the branching point is bonded directly to a moiety derived from the monomer unit constituting the polymer block (or the polymer chain). The phrase "bonded to the branching point through a linking chain" means that one end of the linking chain is bonded to a moiety derived from the monomer unit constituting the polymer block (or the polymer chain), and the branching point is bonded directly to the other end of the linking chain.

For example, a star block copolymer described later is typically such that 3 or more chains each containing a polymer block including aromatic vinyl compound-derived structural units, and a polymer block including conjugated diene compound-derived structural units are directly bonded to a nucleus corresponding to the branching point (typically, a moiety derived from a functional group in a coupling agent described later after reaction with an anionic polymerization active end).

For example, a graft block copolymer described later may be such that the main chain includes 1,2-bonded butadiene units, and a branching point is bonded to the 1,2-bonded butadiene unit. In this case, a polymer block or chain is directly bonded to the main chain via the branching point when the structure is represented by the formula (III-1) below; and a polymer block or chain is bonded to the main chain through the branching point and a linking chain when the structure is represented by the formula (III-2) below. The branching point is absent and a polymer chain is bonded directly to the $CH_2$ moiety of the side chain when the structure is represented by the formula (III-3) below.

[Chem. 10]

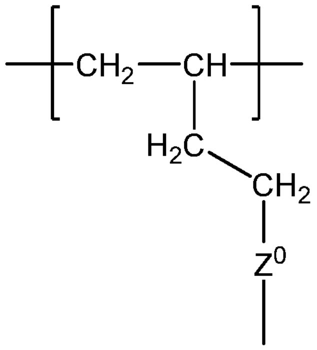

(III-1)

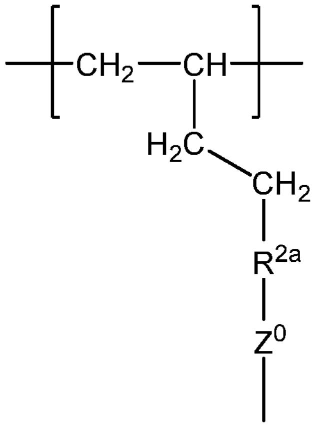

(III-2)

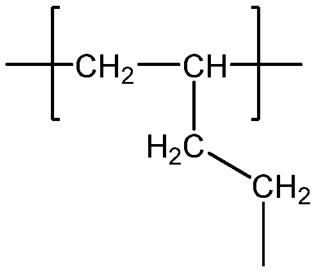

(III-3)

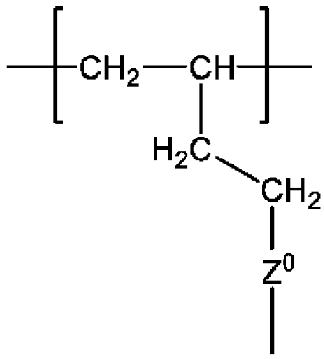

(III-1)

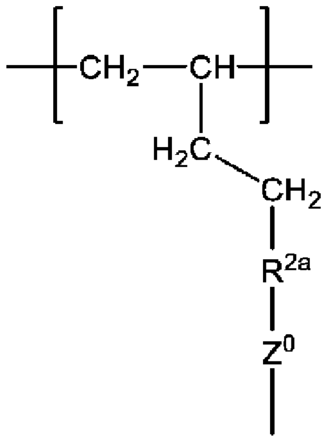

(III-2)

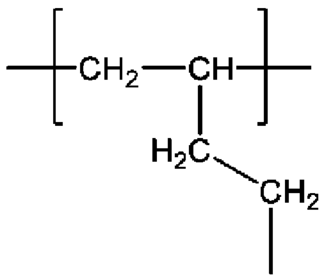

(III-3)

In the formulas (III-1) and (III-2), Z° is a branching point, and $R^{2a}$ is a linking chain. $R^{2a}$ is a divalent organic group, and is preferably an alkylene group optionally having a heteroatom.

In a preferred embodiment, a polymer block (or a polymer chain) is bonded directly to the branching point. In another preferred embodiment, a polymer block (or a polymer chain) is bonded directly without being interrupted by a branching point.

The multibranched block copolymer or the hydrogenated product thereof (B) used in the present invention is characterized by comprising at least one selected from the group consisting of:

star block copolymers (B-1-1) that include 3 or more chains (bα) each containing a polymer block (b1) including aromatic vinyl compound-derived structural units, and a polymer block (b2) including conjugated diene compound-derived structural units, and one nucleus (bβ) derived from a coupling agent, or hydrogenated products thereof (B-1-2) (hereinbelow, these are also written collectively as the optionally hydrogenated star block copolymers (B-1)); and graft block copolymers (B-2-1) that include a main chain (bγ) including conjugated diene compound-derived structural units, and a side chain (bδ) containing a polymer block (b1) including aromatic vinyl compound-derived structural units, and a polymer block (b2) including conjugated diene compound-derived structural units, or hydrogenated products thereof (B-2-2) (hereinbelow, these are also written collectively as the optionally hydrogenated graft block copolymers (B-2)).

[Star block copolymers (B-1-1)]

The star block copolymers (B-1-1) include 3 or more chains (bα), and one nucleus (bβ) derived from a coupling agent.

The star block copolymer (B-1-1) is typically such that the chains (bα) are bonded directly to the nucleus (bβ) corresponding to the branching point described hereinabove (typically, a moiety derived from a functional group in a coupling agent described later after reaction with an anionic polymerization active end). The star block copolymer may be a mixture with a linear block copolymer.

To enhance the impact resistance and the heat shock resistance of the resin composition that is obtained, and to facilitate the production, the average number of chains contained per molecule of the star block copolymer (B-1-1) is preferably 3 to 50, more preferably 5 to 30, and still more preferably 7 to 20. The average number may be determined by the equation (β1-1) below.

(Average number) = (Number average molecular weight of the star block copolymer (B-1-1)) ÷ (Number average molecular weight of chains (bα)) (β1-1)

(Nucleus (bβ))

The nucleus (bβ) is derived from a coupling agent. The coupling agent is a compound that has two or more functional groups capable of reacting with an active end, typically an anionic polymerization active end, of a polymer that will form the chains (bα).

Examples of the coupling agents include aromatic vinyl compounds having two or more alkenyl groups, such as divinylbenzene, 1,2,4-trivinylbenzene, 1,3-divinylnaphthalene, 1,8-divinylnaphthalene, 1,3,5-trivinylnaphthalene, 2,4-divinylphenyl, 3,5,4-trivinylnaphthalene, 1,2-divinyl-3,4-dimethylbenzene, and 1,5,6-trivinyl-3,7-diethylnaphthalene;

halogenated hydrocarbons having two or more halogen groups, such as chloroform, carbon tetrachloride, bromoform, carbon tetrabromide, iodoform, tetraiodomethane, 1,1,2-trichloroethane, 1,1,2,2-tetrachloroethane, 1,1,2,2-tetrabromoethane, hexachloroethane, 1,2,3-trichloropropane, 1,2,3-tribromopropane, 1,2,4-trichloropropane, 1,2,4,5-tetrachlorobenzene, and 1,4-bis(trichloromethyl)benzene;

ketone compounds having two or more functional groups capable of reacting with an anionic active end, typically halogen groups or epoxy groups, such as 1,3-dichloro-2-propanone, 2,4-dibromo-3-pentanone, 1,2,4,5-diepoxy-3-pentanone, and 1,2,11,12-diepoxy-8-pentadecanone;

compounds having two or more isocyanate groups, such as benzene-1,2,4-triisocyanate, naphthalene-1,2,5,7-tetraisocyanate, triphenylmethane triisocyanate, and naphthalene-1,3,7-triisocyanate;

compounds having two or more epoxy groups, such as epoxidized 1,2-polybutadiene, epoxidized soybean oil, epoxidized linseed oil, and 1,2,5,6,9,10-triepoxydecane;

compounds having two or more carboxylic acid ester groups, such as diethyl oxalate, diethyl malonate, diethyl adipate, dioctyl adipate, dimethyl phthalate, diethyl phthalate, and diethyl terephthalate;

compounds having two or more acid anhydride groups, such as pyromellitic anhydride;

silane compounds having two or more functional groups capable of reacting with an anionic active end, typically halogen groups or alkoxy groups, such as bisdimethoxymethylsilylethane, bisdiethoxymethylsilylethane, bisdiethoxyethylsilylpentane, bisdibutoxymethylsilylethane, bistrimethoxysilylhexane, bistriethoxysilylethane, bistripropoxysilylpentane, tetraethoxysilane, bisdichloromethylsilylethane, bisdibromoethylsilylhexane, bisdibromopropylsilylheptane, bistrichlorosilylethane, bistribromosilylhexane, trichlorosilane, methyltrichlorosilane, butyltrichlorosilane, tetrachlorosilane, (dichloromethyl)trichlorosilane, and hexachlorodisilane; and

tin compounds having two or more functional groups capable of reacting with an anionic active end, typically halogen groups or alkoxy groups, such as tetrachlorotin, methyltrichlorotin, butyltrichlorotin, and tetramethoxytin.

Among the coupling agents described above, the aromatic vinyl compounds having two or more alkenyl groups are preferable from points of view such as control of the average number, availability, and production cost, and divinylbenzene is more preferable.

From points of view such as control of the average number, the coupling agent that is used may be a mixture of the aromatic vinyl compound having two or more alkenyl groups, and an aromatic vinyl compound having one alkenyl group.

Examples of the aromatic vinyl compounds having one alkenyl group include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, silyl-substituted styrene derivatives, indene, vinylnaphthalene, and N-vinylcarbazole. These aromatic vinyl compounds may be used singly, or two or more may be used in combination.

Among those described above, styrene, α-methylstyrene, p-methylstyrene, and mixtures thereof are preferable from the point of view of production cost, and styrene is more preferable.

(Chains (bα))

The star block copolymers (B-1-1) include 3 or more chains (bα). The chains (bα) each contain a polymer block (b1) including aromatic vinyl compound-derived structural units, and a polymer block (b2) including conjugated diene compound-derived structural units.

(Polymer blocks (b1))

The polymer blocks (b1) present in the chains (bα) contain aromatic vinyl compound-derived structural units (hereinafter, also written simply as the "aromatic vinyl compound units"). To ensure that the optionally hydrogenated star block copolymer (B-1) that is obtained is finely dispersed in the resin composition, and that the resin composition that is obtained attains excellent impact resistance (mechanical characteristics) and heat shock resistance, the content of the aromatic vinyl compound units in the polymer blocks (b1) is preferably more than 70 mol%, more preferably 80 mol% or more, still more preferably 90 mol% or more, further preferably 95 mol% or more, and particularly preferably substantially 100 mol%.

Examples of the aromatic vinyl compounds include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, silyl-substituted styrene derivatives, indene, vinylnaphthalene, and N-vinylcarbazole. These aromatic vinyl compounds may be used singly, or two or more may be used in combination.

Among those described above, styrene, α-methylstyrene, p-methylstyrene, and mixtures thereof are preferable from the points of view of production cost and the balance of properties, and styrene is more preferable.

As long as the object and the advantageous effects of the present invention are not impaired, the polymer blocks (b1) may contain structural units derived from an additional unsaturated monomer other than aromatic vinyl compounds (hereinafter, such structural units are also written simply as the "additional unsaturated monomer units") in a proportion of 30 mol% or less in the polymer blocks (b1). The proportion is preferably less than 20 mol%, more preferably less than 15 mol%, still more preferably less than 10 mol%, further preferably less than 5 mol%, and particularly preferably 0 mol%.

For example, the additional unsaturated monomer may be at least one selected from the group consisting of, for example, butadiene, isoprene, 2,3-dimethylbutadiene, 1,3-pentadiene, 1,3-hexadiene, myrcene, farnesene, isobutylene, methyl methacrylate, methyl vinyl ether, β-pinene, 8,9-p-menthene, dipentene, methylenenorbornene, and 2-methylenetetrahydrofuran. When the polymer blocks (b1) contain the additional unsaturated monomer units, the manner of bonding is not particularly limited and may be random or tapered.

(Number average molecular weight)

The number average molecular weight (Mn) of the polymer blocks (b1) contained in the chains (bα) is not particularly limited. The Mn of the polymer blocks (b1) is preferably 3,000 to 60,000, and more preferably 4,000 to 50,000. When the chains (bα) in the star block copolymer (B-1-1) have the polymer blocks (b1) having Mn in the above range, mechanical strength is further enhanced and excellent shaping processability is attained.
The number average molecular weight is the number average molecular weight measured by gel permeation chromatography (GPC) relative to standard polystyrenes.

(Content of polymer blocks (b1))

The content of the polymer blocks (b1) in the star block copolymer (B-1-1) is preferably 70 mass% or less, more preferably 60 mass% or less, still more preferably 50 mass% or less, and particularly preferably 40 mass% or less. When the content of the polymer blocks (b1) is not more than the upper limit, the optionally hydrogenated star block copolymer (B-1) that is obtained tends to have appropriate flexibility and shaping properties. The content of the polymer blocks (b1) is preferably 1 mass% or more, more preferably 3 mass% or more, still more preferably 6 mass% or more, and particularly preferably 10 mass% or more. When the content of the polymer blocks (b1) is not less than the lower limit, the optionally hydrogenated star block copolymer (B-1) that is obtained tends to be finely dispersed in the resin composition to ensure that the resin composition attains excellent impact resistance and heat shock resistance, and the optionally hydrogenated star block copolymer (B-1) also tends to have mechanical characteristics and shaping processability suited for various applications.
The content of the polymer blocks (b1) in the star block copolymer (B-1-1) may be determined by $^{1}$H-NMR measurement.
The chains (bα) each contain at least one polymer block (b1). When the chain (bα) contains two or more polymer blocks (b1), the polymer blocks (b1) may be the same as or different from one another. Furthermore, the polymer blocks (b1) contained in the respective chains (bα) may be the same as or different from one another. In the present specification, the phrase that "the polymer blocks are different from one another" means that the polymer blocks differ in at least one of the types of the monomer units constituting the polymer blocks, the number average molecular weights, the stereoregularities, and, when the polymer blocks have a plurality of types of monomer units, the ratios of the monomer units, and the types of copolymerization (random, gradient, block).

(Polymer blocks (b2))

The polymer blocks (b2) present in the chains (bα) contain conjugated diene compound-derived structural units (hereinafter, also written simply as the "conjugated diene compound units"). From the points of view of the shaping processability, the impact resistance, and the heat shock resistance of the resin composition that is obtained, the content of the conjugated diene compound units in the polymer blocks (b2) is preferably 50 mol% or more, more preferably 70 mol% or more, still more preferably 90 mol% or more, and particularly preferably substantially 100 mol%.
Examples of the conjugated diene compounds include butadiene, isoprene, hexadiene, 2,3-dimethyl-1,3-butadiene, 1,3-pentadiene, myrcene, and farnesene. These conjugated diene compounds may be used singly, or two or more may be used in combination.
Among those described above, butadiene, isoprene, and farnesene are preferable. In a preferred embodiment, the conjugated diene compound comprises isoprene. For example, the conjugated diene compound preferably comprises, although not limited to, isoprene alone, a combination of isoprene and butadiene, or a combination of isoprene and farnesene.
When, for example, isoprene and butadiene are used in combination, the blending ratio thereof [isoprene/butadiene] (by mass) is not particularly limited, but is preferably 5/95 to 95/5, more preferably 10/90 to 90/10, still more preferably 40/60 to 70/30, and particularly preferably 45/55 to 65/35. The mixing ratio [isoprene/butadiene] by mol is preferably 5/95 to 95/5, more preferably 10/90 to 90/10, still more preferably 40/60 to 70/30, and particularly preferably 45/55 to 55/45.
When the chain (bα) contains two or more polymer blocks (b2), the polymer blocks (b2) may be the same as or different from one another. Furthermore, the polymer blocks (b2) contained in the chains (bα) may be the same as or different from one another.

(Amount of vinyl bonds in polymer blocks (b2))

The amount of vinyl bonds in the conjugated diene compound units in the polymer blocks (b2) is not particularly limited. The amount of vinyl bonds is preferably 1 to 60 mol%, more preferably 2 to 40 mol%, still more preferably 3 to

30 mol%, and particularly preferably 4 to 20 mol%. When the multibranched block copolymer is produced by anionic polymerization described later, the amounts of vinyl bonds in structures, such as the polymer blocks or polymer chains may be brought to desired values by controlling conditions, such as the type of a solvent that is used, the use of an optional polar compound, and the polymerization temperature.

In the present invention, the "amount of vinyl bonds" means the total mol% of conjugated diene compound-derived structural units that are 1,2-bonded, 3,4-bonded (in the case of other than farnesene) and 3,13-bonded (in the case of farnesene) (conjugated diene compound-derived structural units that are bonded by other than 1,4-bonding (in the case of other than farnesene) and 1,13-bonding (in the case of farnesene)) in 100 mol% of all the conjugated diene compound-derived structural units that are present in a specific polymer, polymer chains, or polymer blocks (for example, the polymer blocks (b2)). In the present invention, the amount of vinyl bonds in an unhydrogenated polymer determined with respect to bonds in the conjugated diene compound-derived structural units is continuously used as the amount of vinyl bonds in the polymer after hydrogenation. The amount of vinyl bonds in an unhydrogenated polymer is calculated from the area ratio of $^1$H-NMR peaks assigned to conjugated diene compound-derived structural units that are 1,2-bonded, 3,4-bonded (in the case of other than farnesene) and 3,13-bonded (in the case of farnesene), and $^1$H-NMR peaks assigned to conjugated diene compound-derived structural units that are 1,4-bonded (in the case of other than farnesene) and 1,13-bonded (in the case of farnesene).

(Additional structural units)

As long as the object and the advantageous effects of the present invention are not impaired, the polymer blocks (b2) may contain structural units derived from an additional polymerizable monomer other than the conjugated diene compounds. In this case, the content of the structural units derived from an additional polymerizable monomer other than the conjugated diene compounds in the polymer blocks (b2) is preferably less than 50 mol%, more preferably less than 30 mol%, still more preferably less than 20 mol%, further preferably less than 10 mol%, and particularly preferably 0 mol%.

For example, the additional polymerizable monomer may be preferably at least one compound selected from the group consisting of aromatic vinyl compounds, such as styrene, α-methylstyrene, o-methylstyrene, m-methylstyrene, p-methylstyrene, p-t-butylstyrene, 2,4-dimethylstyrene, N-vinylcarbazole, vinylnaphthalene, and vinylanthracene, and other compounds, such as methyl methacrylate, methyl vinyl ether, β-pinene, 8,9-p-menthene, dipentene, methylenenorbornene, 2-methylenetetrahydrofuran, 1,3-cyclopentadiene, 1,3-cyclohexadiene, 1,3-cycloheptadiene, and 1,3-cyclooctadiene.

(Number average molecular weight)

The Mn of the polymer blocks (b2) contained in the chains (bα) is not particularly limited. From points of view such as shaping processability, the Mn of the polymer blocks (b2) is preferably 10,000 to 800,000, more preferably 20,000 to 600,000, still more preferably 30,000 to 500,000, particularly preferably 50,000 to 300,000, and most preferably 70,000 to 200,000.

The chains (bα) each have at least one polymer block (b2). When the block copolymer has two or more polymer blocks (b2), the polymer blocks (b2) may be the same as or different from one another.

As long as the object and the advantageous effects of the present invention are not impaired, the chains (bα) may contain a polymerized block composed of an additional monomer other than the polymerized blocks (b1) and (b2). The total content of the polymer blocks (b1) and the polymer blocks (b2) with respect to the whole of the chains (bα) is preferably 90 mass% or more, more preferably 95 mass% or more, and particularly preferably substantially 100 mass%. When the total content is 90 mass% or more, the resin composition that is obtained attains further enhancements in impact resistance and heat shock resistance.

(Manners of bonding of polymer blocks (b1) and polymer blocks (b2))

The polymer block (b1) and the polymer block (b2) may be bonded in any manner without limitation as long as they are contained in the chain (bα). The bonding manner may be linear, branched, radial, or a combination of two or more of these. Furthermore, these polymerized blocks may be bonded directly to each other, or may be bonded indirectly to each other via other polymerized block. In particular, the polymer block (b1) and the polymer block (b2) are preferably bonded in such a manner that these polymer blocks are bonded directly to each other into a linear chain. The following are some exemplary manners of bonding in which b1 indicates the polymer block (b1), b2 indicates the polymer block (b2), and the leftmost polymer block is closest to the nucleus (bβ): a diblock copolymer chain represented by b2-b1, a triblock copolymer chain represented by b2-b1-b2 or b1-b2-b1, a tetrablock copolymer chain represented by b2-b1-b2-b1 or b1-b2-b1-b2, and a pentablock copolymer chain represented by b2-b1-b2-b1-b2 or b1-b2-b1-b2-b1.

In particular, a diblock copolymer chain represented by b2-b1 from the nucleus (bβ) side is preferable for reasons, such as because the resin composition that is obtained is further enhanced in impact resistance and heat shock resistance, and because the production is facilitated.

The star block copolymer (B-1-1) may be produced by any method without limitation. For example, a star block copolymer (B-1-1) that includes 3 or more chains (bα) and a nucleus (bβ) may be prepared by polymerizing a monomer(s) including a conjugated diene compound, and a monomer(s) including an aromatic vinyl compound to form an end-active polymer that will form the chains (bα) containing a polymer block (b2) and a polymer block (b1), and reacting the active ends with a coupling agent.

The end-active polymer that will form the chains (bα) may be produced by a known polymerization process. For example, the end-active polymer may be obtained by anionically polymerizing the monomers in a solvent that is inert to the polymer ends while using an active metal or an active metal compound as an initiator capable of catalyzing anionic polymerization optionally in the presence of a polar compound.

The end-active polymer is an end-active polymer that contains a polymer block (b1) including aromatic vinyl compound-derived structural units, and a polymer block (b2) including conjugated diene compound-derived structural units. The description of specific examples and embodiments, such as preferred embodiments, of the monomers for forming the structural units in the polymer blocks (b1) and (b2) constituting the end-active polymer, and the description of other items, such as additional monomer units that may be contained in the polymer, are the same as the description regarding the chains (bα).

The active metal or active metal compound capable of catalyzing anionic polymerization is preferably an organic alkali metal compound, and more preferably an organolithium compound. Examples of the organolithium compounds include methyllithium, ethyllithium, n-butyllithium, sec-butyllithium, tert-butyllithium, and pentyllithium.

Examples of the solvents include aliphatic hydrocarbons, such as n-butane, n-pentane, isopentane, n-hexane, n-heptane, and isooctane; alicyclic hydrocarbons, such as cyclopentane, cyclohexane, and methylcyclopentane; and aromatic hydrocarbons, such as benzene, toluene, and xylene.

A polar compound may be added during the anionic polymerization. Polar compounds are usually used in anionic polymerization to control the microstructure (the amount of vinyl bonds) of conjugated diene compound unit moieties without deactivating the reaction. Examples of the polar compounds include ether compounds, such as dibutyl ether, tetrahydrofuran, ethylene glycol diethyl ether, and 2,2-di(2-tetrahydrofuryl)propane; tertiary amines, such as tetramethylethylenediamine and trimethylamine; alkali metal alkoxides, and phosphine compounds. The polar compound is usually used in an amount of 0.01 to 1000 mol per mol of the active ends of the active metal or active metal compound capable of catalyzing anionic polymerization.

The temperature of the anionic polymerization is usually in the range of -80 to 150°C, preferably in the range of 0 to 100°C, and more preferably in the range of 10 to 90°C. The polymerization mode may be batchwise or continuous.

The reaction between the active end of the end-active polymer and the coupling agent is typically carried out by adding the coupling agent to a solution that includes the end-active polymer obtained by the anionic polymerization described above. In this manner, the terminal anion of the end-active polymer reacts with the functional group in the coupling agent that is capable of reacting with the anionic polymerization active end.

The amount in which the coupling agent is added relative to the end-active polymer may be determined appropriately so that, for example, the star block copolymer will have a desired number of chains (bα) per molecule. Except when the coupling agent that is used is a mixture of an aromatic vinyl compound having two or more alkenyl groups, and an aromatic vinyl compound having one alkenyl group, the amount of the coupling agent added per mol of the active ends of the end-active polymer is usually 0.5 to 20 mol, preferably 1 to 10 mol, and more preferably 2 to 5 mol. When, on the other hand, the coupling agent that is used is a mixture of an aromatic vinyl compound having two or more alkenyl groups, and an aromatic vinyl compound having one alkenyl group, the amount of the aromatic vinyl compound having two or more alkenyl groups is usually 0.5 to 20 mol, preferably 1 to 10 mol, and more preferably 2 to 5 mol per mol of the active ends of the end-active polymer. The amount of the aromatic vinyl compound having one or more alkenyl groups is usually 2 to 80 mol, and preferably 4 to 40 mol per mol of the active ends of the end-active polymer.

The temperature of the reaction is usually in the range of -80 to 150°C, preferably in the range of 0 to 100°C, and more preferably in the range of 10 to 90°C. The reaction time is usually in the range of 0.5 to 50 hours, and preferably in the range of 1 to 20 hours. The reaction mode may be batchwise or continuous.

The coupling agent may be used after being diluted. The diluent solvent is not particularly limited as long as it is inert to the active ends and does not adversely affect the reaction. Examples include saturated aliphatic hydrocarbons and aromatic hydrocarbons, such as hexane, cyclohexane, heptane, octane, decane, toluene, benzene, and xylene.

Furthermore, the coupling reaction may involve a Lewis base as an additive. Examples of the Lewis bases include ethers, such as dimethyl ether, diethyl ether, tetrahydrofuran, and 2,2-di(2-tetrahydrofuryl)propane; glycol ethers, such as ethylene glycol dimethyl ether and diethylene glycol dimethyl ether; and amines, such as triethylamine, N,N,N',N'-tetramethylethylenediamine, and N-methylmorpholine. These Lewis bases may be used singly, or two or more may be used in combination.

In the coupling reaction, the coupling agent may be added to the reaction vessel in which the end-active polymer has been synthesized, or vice versa, namely, the end-active polymer may be added to the coupling agent. Furthermore, as described hereinabove, the end-active polymer and the coupling agent may be each used after being diluted with a solvent as required. Furthermore, the end-active polymers may be used singly, or two or more may be used in combination, and the coupling agents may be used singly, or two or more may be used in combination.

The coupling ratio in the coupling reaction is preferably 50% or more, more preferably 60% or more, and still more preferably 70% or more. If the coupling ratio is less than 50%, the resin composition that is obtained disadvantageously exhibits lowered impact resistance and lowered heat shock resistance. The coupling ratio is calculated from the following equation (β1-2) using the GPC peak area of components assigned to the uncoupled end-active polymer, and the sum of all the peak areas.

(Coupling ratio (%)) = [{(Sum of all the peak areas) - (Peak area of components assigned to the end-active polymer)}/(Sum of all the peak areas)] × 100 (β1-2)

The coupling ratio may be increased by increasing the amount of the coupling agent added, increasing the amount of the Lewis base added, elevating the reaction temperature, or extending the reaction time. The coupling reaction may be performed until the coupling ratio reaches a desired range. The coupling reaction may be then terminated by adding a polymerization terminator, such as methanol or isopropanol.

[Graft block copolymers (B-2-1)]

The graft block copolymers (B-2-1) include a main chain (bγ) and a side chain (bδ). In the graft block copolymers, as illustrated in the formulas (III-1) to (III-3), the main chain (bγ) and the side chain (bδ) are bonded directly to each other without being interrupted by a branching point, or the main chain (bγ) and the side chain (bδ) are bonded to each other via a branching point directly or indirectly. In the present invention, the graft block copolymers are polymers that have a main-chain backbone composed of a polymer chain, and a side-chain branch composed of a polymer chain, and have two or more different polymer blocks in the polymer chain, typically in the side chain.

(Main chain (bγ))

The main chain (bγ) contains conjugated diene compound-derived structural units (hereinafter, also written simply as the "conjugated diene compound units"). From the points of view of easy production, and the shaping processability, the impact resistance, and the heat shock resistance of the resin composition that is obtained, the content of the conjugated diene compound units in the main chain (bγ) is preferably 50 mol% or more, more preferably 70 mol% or more, still more preferably 90 mol% or more, and particularly preferably substantially 100 mol%.

The description of specific examples and embodiments, such as preferred embodiments, of the conjugated diene compounds is the same as the description regarding the polymer blocks (b2) contained in the chains (bα) in the star block copolymers (B-1-1).

The polymer chain skeleton of the main chain (bγ) is preferably free from units other than structural units derived from a vinyl monomer, such as a conjugated diene compound or an aromatic vinyl compound (for example, free from units having a Si atom or a N atom derived from a coupling agent residue). If the main chain skeleton includes such units other than structural units derived from a vinyl monomer, properties tend to be deteriorated easily because the main chain skeleton is cleaved under conditions that will break bonds between carbon and a heteroatom described later that serves as a branching point, or by shear or heat. The polymer chain as the main chain may have a terminal group other than monomer-derived structural units.

(Amount of vinyl bonds in main chain (bγ))

The amount of vinyl bonds in the conjugated diene compound units in the main chain (bγ) is not particularly limited. The amount of vinyl bonds is preferably 3 to 80 mol%, more preferably 4 to 60 mol%, and still more preferably 6 to 30 mol%.

(Additional structural units)

As long as the object and the advantageous effects of the present invention are not impaired, the main chain (bγ) may contain structural units derived from an additional polymerizable monomer other than the conjugated diene compounds. In this case, the content of the structural units derived from the additional polymerizable monomer other than the conjugated diene compounds in the main chain (bγ) is preferably less than 50 mol%, more preferably less than 30 mol%, still more preferably less than 20 mol%, further preferably less than 10 mol%, and particularly preferably 0 mol%.

The description of specific examples of the additional polymerizable monomers is the same as the description regarding the polymer blocks (b2) contained in the chains (bα) in the star block copolymers (B-1-1).

In a preferred embodiment, the Mn of the main chain (bγ) is 1,000 or more and 1,000,000 or less, more preferably 2,000 or more and 500,000 or less, and still more preferably 3,000 or more and 100,000 or less. When the Mn of the main chain (bγ) is in the above range, excellent process flow efficiency is achieved at the time of manufacturing, and the economic efficiency tends to be improved.

(Side chains (bδ))

The graft block copolymers (B-2-1) include a side chain (bδ). The chain (bδ) contains a polymer block (b1) including aromatic vinyl compound-derived structural units, and a polymer block (b2) including conjugated diene compound-derived structural units.

The description of specific examples and embodiments, such as preferred embodiments, of the polymer blocks (b1) and (b2) contained in the side chain (bδ), and the description of additional polymer blocks that may be contained in the side chain (bδ) are the same as the description regarding the chains (bα) in the star block copolymers (B-1-1).

The polymer chain skeleton of the side chain (bδ) is preferably free from units other than structural units derived from a vinyl monomer, such as a conjugated diene compound or an aromatic vinyl compound (for example, free from units having a Si atom or a N atom derived from a coupling agent residue). If the polymer chain skeleton of the side chain (b) includes such units other than structural units derived from a vinyl monomer, properties tend to be deteriorated easily because the polymer chain skeleton of the side chain (b) is cleaved under conditions that will break bonds between carbon and a heteroatom described later that serves as a branching point, or by shear or heat. The polymer chain as the side chain may have a terminal group other than monomer-derived structural units.

For example, the graft block copolymer (B-2-1) may be produced by a method, such as a method (i) in which a macromonomer (a macromonomer that is obtained by reacting a compound having a polymerizable functional group with an active end of a polymer from the polymerization of a monomer that will form side-chain structural units) and a monomer that will form main-chain structural units are polymerized; a method (ii) in which a main-chain polymer is synthesized beforehand in the presence of a polar compound, such as tetramethylethylenediamine, and is thereafter reacted with an organic alkali metal compound to lithiate the main chain, and subsequently a monomer that will form side-chain structural units is polymerized; a method (iii) in which a mixture is prepared of a polymer that will constitute the main chain and has two active ends, and a polymer that will constitute a side chain and has one active end, and a coupling agent having 3 or more reactive sites is added to the mixture and is reacted with the polymers; or a method (iv) in which a polymer that will constitute the main chain is synthesized beforehand and is modified with a functional group, and the functional group-modified polymer is reacted with an active end of a polymer from the polymerization of a monomer that will form side-chain structural units.

In a preferred embodiment, the graft block copolymer (B-2-1) is a graft block copolymer (B-2-1A) that:

has a structure in which a side chain (bδ) containing a polymer block (b1) and a polymer block (b2) is bonded to a main chain (bγ) that is composed of a polymer including conjugated diene compound-derived structural units, via one trivalent or higher valent heteroatom as a branching point, wherein
the main chain (bγ) is bonded to the branching point directly or through a linking chain,
the side chain (bδ) is bonded directly to the branching point,
the heteroatom is at least one selected from the group consisting of Si, Sn, Ge, Pb, P, B, and Al,
at least one functional group (c) selected from the group consisting of alkoxy groups and hydroxyl groups is bonded directly to at least one branching point, and
the graft block copolymer (B-2-1A) satisfies the following relation (2) in which X is the average number of the functional groups (c) bonded directly to the branching point per molecule, and Y is the average number of the branching points per molecule of the graft block copolymer (B-2-1A) :

$$0 < (X/Y) < 1 \quad (2).$$

For example, the graft block copolymer (B-2-1A) may be prepared by a production method that includes:

a step in which an unmodified conjugated diene polymer (F') that includes conjugated diene compound-derived structural units and will form the main chain (bγ) is prepared by, for example, the anionic polymerization described hereinabove, and subsequently a silane compound (IV) represented by the formula (IV) below (for example, 3-mercaptopropyl)triethoxysilane, (3-mercaptopropyl)trimethoxysilane) is added to a carbon-carbon double bond present in the unmodified conjugated diene polymer (F') by radical addition reaction optionally in the presence of a radical generator (for example, t-butyl peroxypivalate)

[Chem. 11]

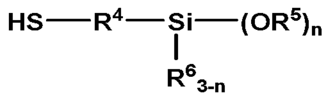

Formula (IV)

(in the formula (IV), $R^4$ denotes a C1-C6 divalent alkylene group; $R^5$ and $R^6$ each independently denote a C6-C12 aryl group, a C1-C12 alkyl group, or a hydrogen atom; n is an integer of 1 to 3; when n is 2 or greater, $R^5$s may be the same as or different from one another; and when 3 - n is 2 or greater, $R^6$s may be the same as or different from one another)

to prepare a functional group-modified conjugated diene polymer (F) that has a partial structure represented by the formula (V) below as a functional group:

[Chem. 12]

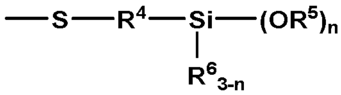

Formula (V)

(in the formula (V), $R^4$, $R^5$, $R^6$, and n are the same as defined in the formula (IV)); and

a step in which a coupling reaction is performed between the functional group-modified conjugated diene polymer (F) obtained above and an end-active polymer (I) prepared by anionic polymerization that contains a polymer block (b1) including aromatic vinyl compound-derived structural units, and a polymer block (b2) including conjugated diene compound-derived structural units and will form a side chain (bδ).

When the graft block copolymer (B-2-1A) is produced by the above production method, it is preferable that the method include, after the coupling reaction step, a step in which at least one kind of residual functional groups (functional groups V that remain unreacted) selected from the group consisting of alkoxy groups and hydroxyl groups in the graft block copolymer (B-2-1A) are partially inactivated (hereinafter, this step will be written as the inactivation step). In this manner, the number of functional groups (c) bonded directly to the branching point can be controlled to the desired range. The reagent used to inactivate the alkoxy groups and the hydroxyl groups may be an alkyllithium, such as n-butyllithium, sec-butyllithium, or t-butyllithium.

When the graft block copolymer (B-2-1A) is produced by the production method described above, the average number (X/Y) satisfying the condition (2) may be achieved by performing the coupling reaction in such a molar ratio that the value of (X/Y) will be 1 or more, and subsequently inactivating part of the above-described residual functional groups (unreacted functional groups V) so that (X/Y) will be less than 1.

In another preferred embodiment, the graft block copolymer (B-2-1) is a graft block copolymer (B-2-1B). In the graft block copolymer (B-2-1B), a main chain (bγ) that is composed of a polymer including conjugated diene compound-derived structural units is bonded directly to a side chain (bδ) containing a polymer block (b1) and a polymer block (b2), at a monomer unit that is contained in the main chain (bγ) and serves as a branching site.

Preferably, there is no heteroatoms in the monomer unit that serves as a branching site (and in a linking site). If the graft block copolymer (B-2-1B) includes a heteroatom in a branching point, such as the branching site, shear stability and thermal stability may be deteriorated.

In the main chain (bγ) of the graft block copolymer (B-2-1B), the linking site that is included in the monomer unit serving as the branching site and is bonded to the side chain (bδ) is preferably not an aromatic group derived from

an aromatic vinyl compound. If the linking site is such an aromatic group, shear stability and thermal stability may be deteriorated. Here, the aromatic group means an aromatic ring-containing group that is possessed by an aromatic vinyl compound and does not have $CH_2$=CR as a portion thereof (R is hydrogen, an optionally substituted alkyl group, or an optionally substituted aryl group).

Here, the phrase "the linking site is not an aromatic group derived from an aromatic vinyl compound" means that the monomer unit itself that is included in the main chain and serves as a branching site is a monomer unit derived from a monomer other than aromatic vinyl compounds (for example, a conjugated diene), or means that the monomer unit itself that is included in the main chain and serves as a branching site is a monomer unit derived from an aromatic vinyl compound, but the side chain (bδ) is not bonded to the aromatic group possessed by the aromatic vinyl compound.

Specific examples will be described below. When, for example, the aromatic vinyl compound is 4-methylstyrene that has a substituent with high anionic activity (high reactivity with an organolithium compound) in its aromatic group, the methyl group moiety derived from 4-methylstyrene exhibits high reactivity, and the side chain (bδ) is bonded to this methyl group moiety.

When, on the other hand, the aromatic vinyl compound is one that has no substituent with high anionic activity in its aromatic group, for example styrene, the side chain (bδ) is bonded to the $CH_2$ moiety that is included in the ($-CH_2-CH_2-$) moiety in the styrene-derived monomer unit which constitutes the skeleton of the main chain (bγ), and that is adjacent to $CH_2$ to which the benzene ring is bonded. In this case, the side chain (bδ) is not bonded to the benzene ring derived from styrene, and the linking site in the branching site included in the main chain (bγ) is not the aromatic group derived from the aromatic vinyl compound.

[Chem. 13]

4-methyl styrene unit

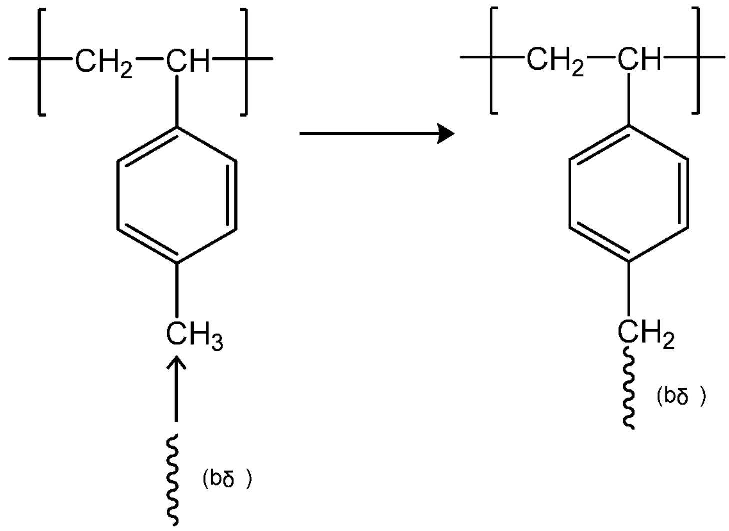

styrene unit

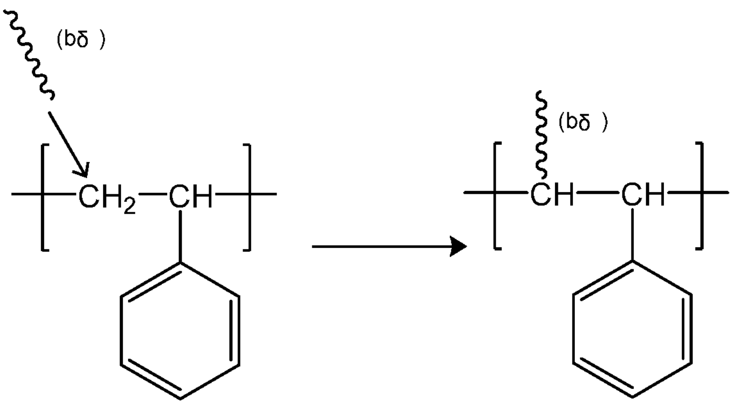

When the main chain (bγ) includes aromatic vinyl compound-derived structural units, the aromatic vinyl compound that gives the aromatic vinyl compound units is preferably styrene or α-methylstyrene.

The average number of the side chains (bδ) per molecule of the graft block copolymer (B-2-1B) is preferably 2 or more, more preferably 5 or more, still more preferably 10 or more, and particularly preferably 15 or more. When, for example, the graft block copolymer (B-2-1B) is produced by a production method described later, the average number of the side chains (bδ) per molecule of the graft block copolymer (B-2-1B) is calculated from the feeding ratio in a step (A'-1) between an organic alkali metal compound used to lithiate a polymer (M) including conjugated diene compound-derived structural units, and the conjugated diene polymer that will form main-chain structural units.

In the graft block copolymer (B-2-1B), the side chain density of the side chains (bδ) is preferably 1.6 mol% or more, more preferably 2.0 mol% or more, still more preferably 3.0 mol% or more, further preferably 4.5 mol% or more, and particularly preferably 6.0 mol% or more.

In the present invention, the side chain density of the side chains (bδ) is determined from the equation (A) below using the average number of the side chains (bδ) per molecule of the conjugated diene graft copolymer (A2), and the number average molecular weight (Mn) of the main chain (bγ) relative to standard polystyrenes.

$$(\text{Side chain density}) = (\text{Average number of the side chains } (b\delta) \text{ per molecule of the graft block copolymer (B-2-1B)})/[(\text{Number average molecular weight Mn of the main chain } (b\gamma))/(\text{Molecular weight of styrene units})] \times 100 \quad (A)$$

When the graft block copolymer (B-2-1B) is produced by a method described below for producing the graft block copolymer (B-2-1B), the Mn of the main chain (bγ) is the standard polystyrene-equivalent Mn of a conjugated diene polymer (M) that is synthesized in the course of the process and will constitute the main chain.

For example, the graft block copolymer (B-2-1B) may be prepared by a production method that includes:

a step (A'-1) in which a polymer (M) that includes conjugated diene compound-derived structural units and will form a main chain (bγ) is prepared by, for example, the anionic polymerization described hereinabove, and subsequently the polymer (M) is reacted with an organolithium compound to lithiate anionic active sites contained in the polymer (M); and

a step (B') in which monomers for forming side chains (bδ) containing a polymer block (b1) and a polymer block (b2), such as a conjugated diene compound and an aromatic vinyl compound, are added and are polymerized onto the lithiated moieties of the polymer (M) to form the side chains on the polymer (M) as the main chain, thereby preparing a conjugated diene graft polymer. This production method may include, after the step of lithiating the anionic active sites contained in the polymer (M), a step (A'-2) of adding a Lewis acid, such as triisobutylaluminum.

When the graft block copolymer (B-2-1A) is produced by the production method described above, the side chain density may be brought to the desired condition described above by, for example, lithiating a controlled number of the anionic active sites contained in the polymer (M) per molecule of the polymer (M).

(hydrogenated products)

The multibranched block copolymer without hydrogenation (hereinafter, also written as the unhydrogenated multibranched block copolymer) comprising at least one selected from the group consisting of the star block copolymers (B-1-1) and the graft block copolymers (B-2-1) may be hydrogenated and used as a hydrogenated star block copolymer (B-1-2) or a hydrogenated graft block copolymer (B-2-2) .

Such a hydrogenated product may be prepared by, for example, dissolving or dispersing the unhydrogenated multibranched block copolymer into an inert organic solvent, and performing hydrogenation reaction (adding hydrogen) in the presence of a hydrogenation catalyst. The hydrogenation reaction hydrogenates at least part of the carbon-carbon double bonds derived from the conjugated diene compound that are contained in the unhydrogenated multibranched block copolymer, thus giving a hydrogenated product of the multibranched block copolymer.

The hydrogenation reaction may be performed at a hydrogen pressure of about 0.1 to 20 MPa, preferably 0.5 to 15 MPa, and more preferably 0.5 to 5 MPa, at a reaction temperature of about 20 to 250°C, preferably 50 to 180°C, and more preferably 70 to 180°C, for a reaction time of usually about 0.1 to 100 hours, and preferably 1 to 50 hours.

Examples of the hydrogenation catalysts include Raney nickel; heterogeneous catalysts in which a metal, such as Pt, Pd, Ru, Rh, or Ni, is supported on a carrier, such as carbon, alumina, or diatomaceous earth; Ziegler catalysts composed of a combination of a transition metal compound and, for example, an alkylaluminum compound or an alkyllithium compound; and metallocene catalysts.

When, for example, the hydrogenation reaction is carried out in a solution, the hydrogenated product obtained may be collected by pouring the solution after the completion of the reaction to, for example, methanol to precipitate the hydrogenated product, followed by heating or drying under reduced pressure, or may be collected by performing so-called steam stripping, specifically, pouring the solution after the completion of the reaction into hot water together with steam, and azeotropically removing the solvent, followed by heating or drying under reduced pressure.

From the points of view of heat resistance and weather resistance, the hydrogenated multibranched block copolymer is preferably such that the carbon-carbon double bonds contained in the conjugated diene compound-derived structural units in the multibranched block copolymer before the hydrogenation are hydrogenated at a hydrogenation ratio of 80 mol% or more, more preferably 90 mol% or more, and still more preferably 97 mol% or more. The hydrogenation ratio is a value determined from the contents of carbon-carbon double bonds contained in the conjugated diene compound-derived structural units in the polymer, calculated by $^1$H-NMR before and after the hydrogenation.

The number average molecular weight (Mn) of the multibranched block copolymer or the hydrogenated product thereof (B) is preferably 700,000 or more, and more preferably 800,000 or more and 5,000,000 or less. When the Mn of the multibranched block copolymer or the hydrogenated product thereof (B) is in the above range, excellent process flow efficiency is achieved at the time of manufacturing, and the economic efficiency tends to be improved. Furthermore, the polymer composition including the multibranched block copolymer or the hydrogenated product thereof (B) tends to exhibit enhanced processability.

The molecular weight distribution (Mw/Mn) of the multibranched block copolymer or the hydrogenated product thereof (B) is preferably 1.0 to 20.0, more preferably 1.0 to 10.0, still more preferably 1.0 to 5.0, and particularly preferably 1.0 to 2.0. When the Mw/Mn is in the above range, the multibranched block copolymer or the hydrogenated product thereof (B) more advantageously exhibits a small variation in viscosity. In the present invention, the molecular weight distribution (Mw/Mn) means the ratio of the weight average molecular weight (Mw) to the number average molecular weight (Mn) measured by GPC relative to standard polystyrenes.

When the multibranched block copolymer or the hydrogenated product thereof (B) that is used is the star block copolymer or the hydrogenated product thereof (B-1), the substantial rubber number average molecular weight of the star block copolymer or the hydrogenated product thereof (B-1) is not particularly limited. From points of view such as shaping processability, the substantial rubber number average molecular weight is preferably 20,000 to 1,600,000, more preferably 40,000 to 1,200,000, still more preferably 60,000 to 1,000,000, particularly preferably 100,000 to 600,000, and most preferably 140,000 to 400,000.

When the polymer blocks (b2) are bonded to the nucleus (b$\alpha$) or the main chain (b$\gamma$), the substantial rubber number average molecular weight indicates (MnA) or (MnB), whichever is larger.

(MnA): Double of the Mn of the polymer blocks (b2) bonded to the nucleus (b$\alpha$) or the main chain (b$\gamma$).
(MnB): The highest Mn of the polymer blocks (b2) included in the multibranched block copolymer or the hydrogenated product thereof (B).

When, on the other hand, the polymer blocks (b2) are not bonded to the nucleus (b$\alpha$) or the main chain (b$\gamma$), the substantial rubber average molecular weight indicates the (MnB) described above.

In the multibranched block copolymer or the hydrogenated product thereof (B), the total of the amounts of catalyst residues coming from, for example, the polymerization catalyst and the catalyst in the hydrogenation (the hydrogenation catalyst) used in the production thereof is preferably in the range of 0 to 500 ppm in terms of metal. When, for example, the multibranched block copolymer before hydrogenation is produced using, as the polymerization catalyst, an organic alkali metal described later, such as an organolithium compound, the product may include the alkali metal, such as lithium. Furthermore, when the multibranched block copolymer is hydrogenated using a Ziegler catalyst as the hydrogenation catalyst, the product may include nickel and aluminum. By controlling the total of the amounts of catalyst residues to fall in the above range, no decrease in tack occurs during processing or other work, and the heat resistance and the transparency of the multibranched block copolymer or the hydrogenated product thereof (B) are enhanced. The total of the amounts of catalyst residues in the multibranched block copolymer or the hydrogenated product thereof (B) is more preferably 0 to 300 ppm, and still more preferably 0 to 200 ppm in terms of metal. The amount of catalyst residues may be measured using, for example, an inductively coupled plasma mass spectrometer (ICP-MS) or a polarized Zeeman atomic absorption spectrophotometer.

The amount of catalyst residues in the multibranched block copolymer or the hydrogenated product thereof (B) may be controlled to the specified amount by, for example, purifying the multibranched block copolymer or the hydrogenated product thereof (B) to remove sufficiently the catalyst residues. The purification method is preferably washing with water or warm water, an acidic aqueous solution, or an organic solvent, such as methanol or acetone, or washing with supercritical fluid carbon dioxide. The washing efficiency may be further increased by using an acidic aqueous solution for the washing. For example, some preferred acids that are used include monovalent or polyvalent strong acids, such as hydrochloric acid, nitric acid, and sulfuric acid; monovalent or polyvalent carboxylic acids, such as acetic acid, propionic acid, succinic acid, and citric acid; and monovalent or polyvalent weak acids, such as carbonic acid and phosphoric acid. From the economic viewpoint, the number of washing operations is preferably 1 to 20 times, and more preferably 1 to 10 times. The washing temperature is preferably 20 to 100°C, and more preferably 40 to 90°C. Prior to the polymerization reaction, the monomers may be purified by distillation or with an adsorbent to remove impurities that will inhibit the polymerization. Such purification allows the polymerization to take place with a reduced amount of the polymerization catalyst, thus making it possible to reduce the amount of catalyst residues.

The resin composition of the present invention includes 1 to 100 parts by mass of the multibranched block copolymer or the hydrogenated product thereof (B) with respect to 100 parts by mass of the thermoplastic resin (A).

From the points of view of the impact resistance, the heat shock resistance, and the mechanical characteristics of the resin composition that is obtained, the content of the multibranched block copolymer or the hydrogenated product thereof (B) in the resin composition is preferably 5 to 30 parts by mass, and more preferably 10 to 25 parts by mass with

respect to 100 parts by mass of the thermoplastic resin (A) .

The resin composition of the present invention may include an inorganic filler (C). The incorporation of the inorganic filler (C) into the resin composition tends to lower the shaping shrinkage ratio and the linear expansion coefficient of shaped articles obtained from the resin composition, and can sometimes enhance the impact resistance at high and low temperatures. Inorganic fillers of various shapes, such as fibrous and non-fibrous (particulate, plate-shaped) are used as the inorganic fillers (C) in accordance with the purpose.

Examples of the fibrous fillers include glass fibers, odd-shaped glass, asbestos fibers, carbon fibers, silica fibers, silica-alumina fibers, zirconia fibers, boron nitride fibers, silicon nitride fibers, boron fibers, potassium titanate fibers; and metal fibers made of metals, such as stainless steel, aluminum, titanium, copper, and brass. Among those described above, glass fibers and carbon fibers are typically used fibrous fillers.

Examples of the particulate fillers include carbon blacks, silica powders, quartz powders, glass beads, glass powders; silicate salt powders made of silicate salts, such as calcium silicate, kaolin, talc, clay, diatomaceous earth, and wollastonite; metal oxide powders made of metal oxides, such as iron oxide, titanium oxide, zinc oxide, and alumina; metal carbonate salt powders made of metal carbonate salts, such as calcium carbonate and magnesium carbonate; metal sulfate salt powders made of metal sulfate salts, such as calcium sulfate and barium sulfate; silicon carbide; nitride powders made of nitrides, such as silicon nitride, and boron nitride; and metal powders.

Examples of the plate-shaped fillers include mica, glass flakes, and various metal foils.

These inorganic fillers (C) may be used singly, or two or more may be used in combination.

Where necessary, the inorganic fillers (C) may be used after being treated with, for example, a sizing agent or a surface treating agent.

The content of the inorganic filler (C) may be determined appropriately in accordance with the purpose. The content of the inorganic filler (C) is usually 1 to 200 parts by mass, and preferably 20 to 100 parts by mass with respect to 100 parts by mass of the thermoplastic resin (A). If the content is below the lower limit, the inorganic filler (C) tends to fail to offer effective enhancements in properties, such as impact resistance and heat shock resistance. If the content of the inorganic filler (C) is in excess of the upper limit, shaping work may be difficult.

The resin composition of the present invention may include a flame retardant. The flame retardant can impart flame retardancy to the resin composition and shaped articles obtained in the present invention. The flame retardant that is used may be a flame retardant generally used for resins.

Examples of the flame retardants include halogen flame retardants, such as organic chlorine compounds and organic bromine compounds; phosphorus flame retardants, such as phosphoric acid salts, phosphoric acid esters, nitrogen-containing phosphorus compounds, and red phosphorus; and other inorganic flame retardants, such as zinc borate, ammonium borate, ammonium sulfamate, and ammonium bromide. Among these flame retardants, the halogen flame retardants, particularly organic bromine compounds, are suitable. Some preferred organic bromine compounds are brominated aromatic bisimide compounds, brominated aromatic epoxy compounds, brominated polycarbonates, brominated benzyl acrylate and polymers thereof, and brominated polystyrenes.

The flame retardants may be used singly, or two or more may be used in combination.

When the flame retardant is added to the resin composition of the present invention, a flame retardant aid may be added as required in order to enhance the effect of the flame retardant. The flame retardant aid that is used may be a flame retardant aid generally used for resins.

Examples of the flame retardant aids include antimony compounds, such as antimony trioxide, antimony tetroxide, antimony pentoxide, and sodium antimonate; and metal oxides or metal hydroxides, such as tin dioxide, aluminum hydroxide, and magnesium hydroxide. When, in particular, the flame retardant that is used is a halogen flame retardant (typically an organic bromine compound), an antimony compound is preferably used as the flame retardant aid.

The flame retardant aids may be used singly, or two or more may be used in combination.

The content of the flame retardant may be determined appropriately in accordance with the purpose. The content of the flame retardant is preferably 1 to 25 mass%, more preferably 5 to 20 mass%, and still more preferably 10 to 20 mass% of the resin composition. If the content of the flame retardant is below the lower limit, sufficient flame retardancy may not be obtained. If the content is in excess of the upper limit, desired properties, such as heat shock resistance, may be deteriorated. When the flame retardant and the flame retardant aid are used in combination, the total content of these preferably falls in the above range.

Furthermore, the resin composition or shaped articles are sometimes required to satisfy the flame retardant classification "V-0" according to UL Standard 94 depending on their applications. In this case, it is preferable to use, for example, a fluororesin together with the flame retardant.

The fluororesins include homopolymers or copolymers of fluorine-containing monomers, such as tetrafluoroethylene, chlorotrifluoroethylene, vinylidene fluoride, hexafluoropropylene, and perfluoroalkyl vinyl ethers; and copolymers of the fluorine-containing monomers and copolymerizable monomers, such as ethylene, propylene, and (meth)acrylates.

Specific examples of the fluororesins include, for example, homopolymers, such as polytetrafluoroethylene,

polychlorotrifluoroethylene, and polyvinylidene fluoride; tetrafluoroethylene-hexafluoropropylene copolymer, tetrafluoroethylene-perfluoroalkyl vinyl ether copolymers, ethylene-tetrafluoroethylene copolymer, and ethylene-chlorotrifluoroethylene copolymer.

The fluororesins may be used singly, or two or more may be used in combination. The fluororesins may be used in the form of granules. The fluororesin is preferably added in an amount of about 0.1 to 10 parts by mass, more preferably about 0.1 to 5 parts by mass, and still more preferably about 0.2 to 1 part by mass with respect to 100 parts by mass of the thermoplastic resin (A).

The resin composition of the present invention may include an epoxy compound. The epoxy compound added to the resin composition of the present invention is a compound that has 2 or more oxirane rings (epoxy groups) in the molecule, with examples including glycidyl ether-type epoxy resins, glycidyl ester-type epoxy resins (such as diglycidyl phthalate, diglycidyl tetrahydrophthalate, diglycidyl hexahydrophthalate, dimethyl glycidyl phthalate, dimethyl glycidyl hexahydrophthalate, dimer acid glycidyl esters, aromatic diglycidyl esters, and cycloaliphatic diglycidyl esters), glycidyl amine-type epoxy resins (such as, for example, tetraglycidyl diaminodiphenylmethane, triglycidyl-para-aminophenol, triglycidyl-meta-aminophenol, diglycidyl toluidine, tetraglycidyl meta-xylylene diamine, diglycidyl tribromoaniline, and tetraglycidyl bisaminomethylcyclohexane), heterocyclic epoxy resins (such as, for example, triglycidyl isocyanurate (TGIC) and hydantoin-type epoxy resins), cyclic aliphatic epoxy resins (such as, for example, vinylcyclohexene dioxide, dicyclopentadiene oxide, alicyclic diepoxy acetals, alicyclic diepoxy adipates, and alicyclic diepoxycarboxylates), and epoxidized butadiene.

The glycidyl ether-type epoxy resins include glycidyl ethers of polyhydroxy compounds [such as bisphenol-type epoxy resins (such as, for example, bisphenol A-type, bisphenol AD-type, or bisphenol F-type epoxy resins), glycidyl ethers of aromatic polyhydroxy compounds, such as resorcin-type epoxy resins, and aliphatic epoxy resins (such as, for example, glycidyl ethers of alkylene glycols or polyoxyalkylene glycols)], and novolak-type epoxy resins (such as, for example, phenol novolak-type or cresol novolak-type epoxy resins).

Among the epoxy compounds described above, the bisphenol-type epoxy resins, the resorcin-type epoxy resins, the novolak-type epoxy resins, and the cyclic aliphatic epoxy resins are preferable. In particular, the bisphenol A-type epoxy resins and the novolak-type epoxy resins are preferable.

The epoxy compounds may be used singly, or two or more may be used in combination.

The epoxy equivalent of the epoxy compounds is typically about 250 to 1200 g/eq, preferably about 300 to 1100 g/eq, and more preferably about 400 to 1000 g/eq. The number average molecular weight of the epoxy compounds is typically about 200 to 50,000, preferably about 300 to 10,000, and more preferably about 400 to 6,000.

The content of the epoxy compound may be determined appropriately in accordance with the purpose. The content of the epoxy compound is usually 0.1 to 1.5 parts by mass with respect to 100 parts by mass of the total of the thermoplastic resin (A), the multibranched block copolymer or the hydrogenated product thereof (B), and the optional inorganic filler (C), flame retardant, flame retardant aid, and fluororesin. If the content is less than 0.1 part by mass, the epoxy compound may be poorly effective in the enhancement in heat shock resistance. If the content is in excess of 1.5 parts by mass, crosslinking by the epoxy compound comes to have an excessively significant influence and may cause problems in productivity.

The resin composition of the present invention may include at least one polyfunctional compound selected from the group consisting of isocyanate compounds and carboxylic acid dianhydrides.

Examples of the polyfunctional compounds include triglycidyl diisocyanate, diisocyanate compounds, and carboxylic acid dianhydrides. More specific examples of the polyfunctional compounds include diisocyanate compounds, such as 2,4-tolylene diisocyanate, 4,4'-diphenylmethane diisocyanate, tolidine diisocyanate, hexamethylene diisocyanate, meta-xylene diisocyanate, 1,5-naphthalene diisocyanate, and derivatives of the above isocyanates (polymer urethanes, oligomers higher than uretdione dimer, cyanurate polymers); and tetracarboxylic acid dianhydrides, such as pyromellitic anhydride, naphthalenetetracarboxylic dianhydride, and, for example, bis(3,4-dicarboxyphenyl)alkanoic dianhydrides represented by the following general formula:

[Chem. 14]

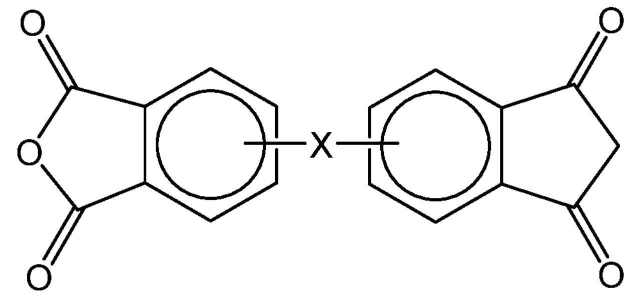

(In the above formula, X denotes -O-, $-SO_2-$, -CO-, or a divalent hydrocarbon group.)

The polyfunctional compounds may be used singly, or two or more may be used in combination.

The content of the polyfunctional compound is preferably 0.1 to 10 mass%, more preferably 0.5 to 5 mass%, and still more preferably 0.5 to 3 wt% of the resin composition. If the content of the polyfunctional compound is below the lower limit, properties, such as heat shock resistance, may not be enhanced with sufficient effects. If the content of the polyfunctional compound is in excess of the upper limit, problems may occur in shaping properties, such as an increase in the viscosity of the resin composition.

The resin composition of the present invention may include an aromatic polycarboxylic acid ester. The aromatic polycarboxylic acid esters used in the resin composition of the present invention are compounds represented by the following general formula.

[Chem. 15]

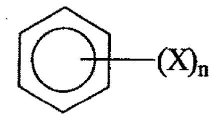

(In the formula, X denotes -COOR, R is an alkyl group, n is an integer of 2 to 4, and Rs in Xs may be the same as or different from one another.)

In particular, those compounds in which n is 3 or greater are preferable because of their high heat resistance. Preferred aromatic polycarboxylic acid esters are trimellitic acid esters and pyromellitic acid esters.

Examples of the alkyl groups contained in the aromatic polycarboxylic acids (alkyl esters) include trioctyl group, triisodecyl group, tris(2-ethylhexyl) group, and tributyl group. The aromatic polycarboxylic acids are desirably alkyl esters having at least one kind of these exemplary alkyl groups.

The aromatic polycarboxylic acid esters may be used singly, or two or more may be used in combination.

The content of the aromatic polycarboxylic acid ester is preferably 0.1 to 10 mass%, more preferably 0.5 to 7 mass%, and still more preferably 1 to 5 mass% of the resin composition. If the content of the aromatic polycarboxylic acid ester is below the lower limit, desired properties, such as heat shock resistance, may be insufficient. If the content is in excess of the upper limit, desired properties, such as rigidity, may be deteriorated, and problems may occur, such as the aromatic polycarboxylic acid ester bleeding out on the surface of the resin composition or a shaped article.

When the thermoplastic resin (A) is the polybutylene terephthalate resin (A-1), the resin composition of the present invention may include a carbodiimide compound.

The carbodiimide compound is a compound having a carbodiimide group (-N=C=N-) in the molecule. The carbodiimide compound that is used may be any of aliphatic carbodiimide compounds having an aliphatic main chain, alicyclic carbodiimide compounds having an alicyclic main chain, and aromatic carbodiimide compounds having an aromatic main chain. In terms of hydrolysis resistance, it is preferable to use an aromatic carbodiimide compound.

Examples of the aliphatic carbodiimide compounds include diisopropylcarbodiimide and dioctyldecylcarbodiimide. Examples of the alicyclic carbodiimide compounds include dicyclohexylcarbodiimide.

Examples of the aromatic carbodiimide compounds include mono- or dicarbodiimide compounds, such as diphenylcarbodiimide, di-2,6-dimethylphenylcarbodiimide, N-tolyyl-N'-phenylcarbodiimide, di-p-nitrophenylcarbodiimide, di-p-aminophenylcarbodiimide, di-p-hydroxyphenylcarbodiimide, di-p-chlorophenylcarbodiimide, di-p-methoxyphenylcarbodiimide, di-3,4-dichlorophenylcarbodiimide, di-2,5-dichlorophenylcarbodiimide, di-o-chlorophenylcarbodiimide, p-phenylene-bis-di-o-tolyylcarbodiimide, p-phenylene-bis-dicyclohexylcarbodiimide, p-phenylene-bis-di-p-chlorophenylcarbodiimide, and ethylene-bis-diphenylcarbodiimide; and polycarbodiimide compounds, such as poly(phenylenecarbodiimide), poly(4,4'-diphenylmethanecarbodiimide), poly(3,5'-dimethyl-4,4'-biphenylmethanecarbodiimide), poly(p-phenylenecarbodiimide), poly(m-phenylenecarbodiimide), poly(3,5'-dimethyl-4,4'-diphenylmethanecarbodiimide), poly(naphthylenecarbodiimide), poly(1,3-diisopropylphenylenecarbodiimide), poly(1-methyl-3,5-diisopropylphenylenecarbodiimide), poly(1,3,5-triethylphenylenecarbodiimide), and poly(triisopropylphenylenecarbodiimide) . Two or more of these may be used in combination.

Among those described above, di-2,6-dimethylphenylcarbodiimide, poly(4,4'-diphenylmethanecarbodiimide), poly(phenylenecarbodiimide), and poly(triisopropylphenylenecarbodiimide) are particularly preferable.

Furthermore, it is preferable that the carbodiimide compound that is used have a molecular weight of 2,000 or more. If the molecular weight is less than 2,000, there is a risk that gas or odor may be generated when, for example, the residence time is long during melt-kneading or shaping.

The amount in which the carbodiimide compound is added is preferably such that the amount of the carbodiimide functional groups is 0.3 to 2.0 equivalents relative to the amount of the terminal carboxyl groups in the polybutylene terephthalate resin (A-1) taken as 1.

If added in an excessively small amount, the carbodiimide compound may fail to effectively improve the heat shock resistance of the resin composition that is obtained. On the other hand, the addition of an excessively large amount tends to lower fluidity and to result in generation of gel components and carbides at the time of compounding or shaping process, causing a decrease in mechanical characteristics and giving rise to a sharp drop in strength under humid and hot conditions. This is because the carbodiimide compound inhibits the adhesion between the polybutylene terephthalate resin and glass fibers. The amount in which the carbodiimide compound is added is more preferably such that the amount of the carbodiimide functional groups is 0.5 to 2.0 equivalents, still more preferably 0.8 to 1.5 equivalents, relative to the amount of the terminal carboxyl groups in the polybutylene terephthalate resin (A-1) taken as 1.

The resin composition of the present invention may include additives other than those described above as long as the characteristics are not deteriorated. Examples of the additives include mold release agents, such as paraffin waxes, polyethylene waxes, stearic acid and esters thereof, and silicon oils; heat stabilizers, such as hindered phenol compounds, phosphorus acid ester compounds, and sulfur-containing ester compounds; crystallization accelerators; UV absorbers or weather resistance-imparting agents; dyes, pigments, foaming agents, and antistatic agents.

Furthermore, the resin composition of the present invention may include a thermoplastic resin other than the thermoplastic resins (A). Examples of such thermoplastic resins include polyamide resins, such as nylon 6, nylon 66, nylon 12, and nylon MXD6; liquid crystal polymers, polycarbonate resins, acrylic resins; acrylonitrile resins, such as acrylonitrile/styrene copolymer, acrylonitrile/butadiene/styrene copolymer, and acrylonitrile/ethylene/styrene copolymer; olefin resins, such as polyethylene, polypropylene, and ethylene-propylene copolymer; and ionomer resins.

Furthermore, the resin composition of the present invention may include an elastomer or a thermosetting resin.

Examples of the elastomers include nylon elastomers, acrylic rubbers, acrylic core shell polymers, isobutylene/isoprene rubbers, styrene/butadiene rubbers, and ethylene/propylene rubbers.

Examples of the thermosetting resins include phenoxy resins, phenol resins, melamine resins, silicone resins, and epoxy resins.

The resin composition of the present invention may be prepared by any method using a known technique without limitation. For example, the resin composition may be produced by mixing the thermoplastic resin (A), the multibranched block copolymer or the hydrogenated product thereof (B), and optional components with use of a mixer, such as a Henschel mixer, a twin-cylinder mixer, a ribbon blender, a tumbler blender, a conical blender, or a Brabender mixer. In the preparation of the resin composition of the present invention, the above mixing may be followed by melt-kneading with a kneading machine, such as a single-screw extruder, a twin-screw extruder, a kneader, a Banbury mixer, or a roll, at, for example, 80 to 350°C.

<Shaped articles>

The resin composition of the present invention may be shaped and used as a shaped article.

Examples of the methods for shaping the resin composition of the present invention include extrusion, injection molding, blow molding, compression molding, vacuum forming, and calendering. By these methods, various shapes, sheets, films, and other shaped articles may be obtained. Furthermore, shaped articles in the form of nonwoven fabrics or fibrous materials may be fabricated by such a method as a melt-blowing method or a spunbonding method.

For example, the shaped articles of the present invention may exclusively include a resin member formed from the resin composition of the present invention, or may include a resin member formed from the resin composition of the present invention, and a dissimilar member formed from other material.

The other material may be at least one selected from the group consisting of metals and non-metallic inorganic

solids. Examples of the metals include aluminum, magnesium, copper, iron, brass, and alloys thereof. Examples of the non-metallic inorganic solids include glass and ceramics.

When the shaped article includes the resin member formed from the resin composition of the present invention, and the inorganic member described above, the shaped article is preferably such that the resin member formed from the resin composition of the present invention is provided so as to cover at least part of the inorganic member.

Furthermore, the shaped article including the inorganic member described above and the resin member formed from the resin composition of the present invention is preferably used for the purpose of compensating for an imperfection of the resin composition of the present invention while taking advantage of the characteristics of the resin composition. Thus, it is desirable that the member that is used be not deformed or be not melted when brought into contact with the resin composition of the present invention (typically, a melt of the resin composition) during the shaping process.

For example, the shaped article may be fabricated by compression molding the resin composition of the present invention with respect to a desired shape of an inorganic member so as to cover the surface of the inorganic member.

Furthermore, the shaped article having an inorganic member and a resin member formed from the resin composition of the present invention may also be fabricated by insert molding.

In the insert molding, first, an inorganic member having a desired shape is introduced beforehand into a mold, and a melt of the resin composition of the present invention is poured into the mold so as to cover at least part of the surface of the inorganic member, thereby fabricating a shaped article including the inorganic member and the resin member. The resin composition may be fed to fill the mold by, for example, an injection molding method, an extrusion method, or a compression molding method, generally by an injection molding method.

In the case of an injection molding method, the resin composition of the present invention is desirably molded into a desired shape with respect to an inorganic member formed beforehand with a desired shape (for example, such a shape as a rod, a pin, or a screw) to form a shaped article that includes the inorganic member and the resin member formed from the resin composition of the present invention.

The shaped articles that include the resin member formed from the resin composition of the present invention and the inorganic member described above are suitably used in various applications, such as parts for automobiles including electric vehicles, and electronic parts. In particular, the shaped articles are suitably used for automobile parts applications because they are resistant to heat shock cracks even when exposed to significant temperature changes.

Examples

Hereinbelow, the present invention will be described in detail by way of Examples and Comparative Examples without limiting the scope of the present invention thereto.

Properties of block copolymers or hydrogenated products thereof obtained in Production Examples described later were evaluated by the following methods.

<Content of polymer blocks (b1)>

A block copolymer before hydrogenation was dissolved into $CDCl_3$, and the solution was subjected to $^1$H-NMR measurement [device: "ADVANCE 400 Nano bay" (manufactured by Bruker), measurement temperature: 30°C]. The content (wt%) of polymer blocks (b1) was calculated from the ratio of the peak intensity assigned to styrene and the peak intensity assigned to a diene.

<Number average molecular weight (Mn)>

The polystyrene-equivalent number average molecular weight (Mn) was determined by gel permeation chromatography (GPC) measurement under the following conditions.

(GPC measurement device and measurement conditions)

·Device: GPC device "HLC-8020" (manufactured by TOSOH CORPORATION)
·Separation columns: "TSKgel GMHXL", "G4000HXL", and "G5000HXL" manufactured by TOSOH CORPORATION were connected in series.
·Eluent: Tetrahydrofuran
·Eluent flow rate: 0.7 mL/min
·Sample concentration: 5 mg/10 mL
·Column temperature: 40°C
·Detector: Differential refractive index (RI) detector
·Calibration curve: Created using standard polystyrenes

<Amount of vinyl bonds in polymer blocks (b2)>

A block copolymer before hydrogenation was dissolved into $CDCl_3$, and the solution was subjected to $^1$H-NMR measurement [device: "ADVANCE 400 Nano bay" (manufactured by Bruker), measurement temperature: 30°C]. The amount of vinyl bonds was calculated from the area ratio of peaks assigned to conjugated diene compound-derived structural units that were 1,2-bonded, 3,4-bonded (in the case of other than farnesene) and 3,13-bonded (in the case of farnesene), and peaks assigned to conjugated diene compound-derived structural units that were 1,4-bonded (in the case of other than farnesene) and 1,13-bonded (in the case of farnesene).

<Coupling ratio>

The coupling ratio was determined from the equation below using the peak area of uncoupled polymer components, namely, chains (bα), obtained by the above GPC measurement, and the sum of all the peak areas obtained by the above GPC measurement.

(Coupling ratio (%)) = [(Sum of all the peak areas) - (Peak area of chains (bα))] ÷ (Sum of all the peak areas) × 100

<Average number of chains (bα)>

The average number of chains was determined from the equation below using the number average molecular weight (Mn) described above.

(Average number of chains (bα)) = (Mn of optionally hydrogenated star block copolymer (B-1)) ÷ (Mn of chains (bα))

<Hydrogenation ratio of polymer blocks (b2)>

A block copolymer was dissolved into $CDCl_3$ before and after hydrogenation. The solutions were subjected to $^1$H-NMR measurement [device: "ADVANCE 400 Nano bay" (manufactured by Bruker), measurement temperature: 30°C]. The hydrogenation ratio of polymer blocks (b2) was calculated from the equation below based on the peak assigned to protons present in carbon-carbon double bonds appearing at 4.2 to 6.0 ppm in the spectrum obtained.

Hydrogenation ratio = {1 - (Number of moles of carbon-carbon double bonds contained in 1 mol of the block copolymer after hydrogenation)/(Number of moles of carbon-carbon double bonds contained in 1 mol of the block copolymer before hydrogenation)} × 100 (mol%)

[Production Example 1]

A pressure-resistant vessel that had been purged with nitrogen and dried was charged with 2410 g of cyclohexane as a solvent and 3.9 g of a 10.5 mass% cyclohexane solution of sec-butyllithium as an anionic polymerization initiator.

After the temperature inside the pressure-resistant vessel was increased to 50°C, 212 g of styrene as an aromatic vinyl compound was added and was polymerized for 1 hour. A polymer block (b1) was thus synthesized. A portion of the solution obtained was sampled and was analyzed by GPC to measure the Mn of the polymer block (b1).

Subsequently, 393 g of isoprene as a conjugated diene compound was added into the vessel over a period of 1 hour and was polymerized for 2 hours while maintaining the temperature inside the vessel at 50°C. Thus, chains (bα) composed of polymer block (b1)-polymer block (b2) were synthesized. A portion of the solution obtained was sampled and was analyzed by GPC to measure the Mn of the chains (bα). Furthermore, 2.5 g of divinylbenzene and 8.0 g of styrene as coupling agents were added to the vessel (the amounts per mol of active ends of the end-active polymer were 3 mol and 12 mol, respectively), and polymerization was performed for 2 hours while maintaining the temperature inside the vessel at 50°C. Subsequently, 0.31 g of methanol was added to terminate the polymerization reaction. A reaction solution including a star block copolymer (B-1-1A) was thus obtained. A portion of the solution obtained was sampled and was analyzed by GPC to measure the Mn of the star block copolymer (B-1-1A).

A Ziegler hydrogenation catalyst formed of nickel octylate and trimethylaluminum was added to the reaction solution under a hydrogen atmosphere, and the reaction was performed under conditions of a hydrogen pressure of 1 MPa and 80°C for 3 hours. The reaction solution was allowed to cool, and the pressure was released. Subsequently, the catalyst was removed by water washing, and the solution was vacuum dried to give a hydrogenated star block copolymer (hereinafter, B-1-2A). The results of the properties evaluation are described in Table 1.

[Production Example 1']

A pressure-resistant vessel that had been purged with nitrogen and dried was charged with 2410 g of cyclohexane and 2.0 g of a 10.5 mass% cyclohexane solution of sec-butyllithium. After the temperature inside the pressure-resistant vessel was increased to 50°C, 106 g of styrene as an aromatic vinyl compound was added and was polymerized for 1 hour. A polymer block (b1') was thus synthesized. A portion of the solution obtained was sampled and was analyzed by GPC to measure the Mn of the polymer block (b1'). Subsequently, while maintaining the temperature inside the vessel at 50°C, 393 g of isoprene as a conjugated diene compound was added into the vessel over a period of 1 hour and was polymerized for 2 hours, and further 106 g of styrene as an aromatic vinyl compound was added and was polymerized for 2 hours. Subsequently, 0.15 g of methanol was added to terminate the polymerization reaction. A reaction solution was thus obtained that included a linear block copolymer (B-1-1A') composed of polymer block (b1')-polymer block (b2')-polymer block (b1'). A portion of the solution obtained was sampled and was analyzed by GPC to measure the Mn of the linear block copolymer (B-1-1A'). The copolymer was hydrogenated, water-washed, and vacuum dried in the same manner as in Production Example 1 to give a hydrogenated linear block copolymer (hereinafter, B-1-2A'). The results of the properties evaluation are described in Table 1.

[Production Example 2]

A pressure-resistant vessel that had been purged with nitrogen and dried was charged with 2410 g of cyclohexane and 3.9 g of a 10.5 mass% cyclohexane solution of sec-butyllithium. After the temperature inside the pressure-resistant vessel was increased to 50°C, 165 g of styrene as an aromatic vinyl compound was added and was polymerized for 1 hour. A polymer block (b1) was thus synthesized. A portion of the solution obtained was sampled and was analyzed by GPC to measure the Mn of the polymer block (b1). Subsequently, isoprene/butadiene (217 g/172 g) as conjugated diene compounds were added into the vessel over a period of 1 hour and were polymerized for 2 hours while maintaining the temperature inside the vessel at 50°C. Thus, chains (bα) composed of polymer block (b1)-polymer block (b2) were synthesized. A portion of the solution obtained was sampled and was analyzed by GPC to measure the Mn of the chains (bα). Furthermore, 2.5 g of divinylbenzene and 8.0 g of styrene as coupling agents were added to the vessel (the amounts per mol of active ends of the end-active polymer were 3 mol and 12 mol, respectively), and polymerization was performed for 2 hours while maintaining the temperature inside the vessel at 50°C. Subsequently, 0.31 g of methanol was added to terminate the polymerization reaction. A reaction solution including a star block copolymer (B-1-1B) was thus obtained. A portion of the solution obtained was sampled and was analyzed by GPC to measure the Mn of the star block copolymer (B-1-1B). The copolymer was hydrogenated, water-washed, and vacuum dried in the same manner as in Production Example 1 to give a hydrogenated linear block copolymer (hereinafter, B-1-2B). The results of the properties evaluation are described in Table 1.

[Production Example 2']

A pressure-resistant vessel that had been purged with nitrogen and dried was charged with 2410 g of cyclohexane and 2.0 g of a 10.5 mass% cyclohexane solution of sec-butyllithium. After the temperature inside the pressure-resistant vessel was increased to 50°C, 82.7 g of styrene as an aromatic vinyl compound was added and was polymerized for 1 hour. A polymer block (b1') was thus synthesized. A portion of the solution obtained was sampled and was analyzed by GPC to measure the Mn of the polymer block (b1'). Subsequently, while maintaining the temperature inside the vessel at 50°C, isoprene/butadiene (217 g/172 g) as conjugated diene compounds were added into the vessel over a period

of 1 hour and were polymerized for 2 hours, and further 82.7 g of styrene as an aromatic vinyl compound was added and was polymerized for 2 hours. Subsequently, 0.15 g of methanol was added to terminate the polymerization reaction. A reaction solution was thus obtained that included a linear block copolymer (B-1-1B') composed of polymer block (b1')-polymer block (b2')-polymer block (b1'). A portion of the solution obtained was sampled and was analyzed by GPC to measure the Mn of the linear block copolymer (B-1-1B'). The copolymer was hydrogenated, water-washed, and vacuum dried in the same manner as in Production Example 1 to give a hydrogenated linear block copolymer (hereinafter, B-1-2B'). The results of the properties evaluation are described in Table 1.

[Table 1]

| | | Production Example 1 | Production Example 1' |
|---|---|---|---|
| Before hydrogenation | Name | B-1-1A | B-1-1A' |
| | Polymer structure | Star | Linear |
| | Aromatic vinyl compound | Styrene | Styrene |
| | Content (mass%) of polymer blocks (b1) or (b1') | 35 | 35 |
| | Mn of polymer blocks (b1) or (b1') | 31,000 | 31,000 |
| | Conjugated diene compound | Isoprene | Isoprene |
| | Mn of polymer blocks (b2) or (b2') | 90,000 | 180,000 |
| | Amount (mol%) of vinyl bonds in polymer blocks (b2) or (b2') | 6 | 6 |
| | Mn of chains (bα) | 121,000 | - |
| | Coupling agents | Divinylbenzene/ Styrene | - |
| | Coupling ratio (%) | 90 | - |
| | Mn of block copolymer | 1,030,000 | 242,000 |
| | Average number of chains | 8.5 | - |
| | Substantial rubber number average molecular weight | 180,000 | 180,000 |
| After hydrogenation | Name | B-1-2A | B-1-2A' |
| | Polymer structure | Star | Linear |
| | Hydrogenation ratio of polymer blocks (b2) or (b2') | 99 | 99 |
| | Mn of polymer blocks (b2) or (b2') | 97,000 | 195,000 |
| | Mn of chains (bα) | 128,000 | - |
| | Mn of block copolymer | 1,110,000 | 257,000 |
| | Average number of chains | 8.7 | - |
| | Substantial rubber number average molecular weight | 194,000 | 195,000 |

Table 1 (continued)

| | | Production Example 2 | Production Example 2' |
|---|---|---|---|
| Before hydrogenation | Name | B-1-1B | B-1-1B' |
| | Polymer structure | Star | Linear |
| | Aromatic vinyl compound | Styrene | Styrene |
| | Content (mass%) of polymer blocks (b1) or (b1') | 30 | 30 |
| | Mn of polymer blocks (b1) or (b1') | 27,000 | 27,000 |
| | Conjugated diene compound | Isoprene/Butadiene | Isoprene/Butadiene |
| | Mn of polymer blocks (b2) or (b2') | 110,000 | 220,000 |
| | Amount (mol%) of vinyl bonds in polymer blocks (b2) or (b2') | 8 | 8 |
| | Mn of chains (bα) | 137,000 | - |
| | Coupling agents | Divinylbenzene/ Styrene | - |
| | Coupling ratio (%) | 89 | - |
| | Mn of block copolymer | 1,096,000 | 274,000 |
| | Average number of chains | 8.0 | - |
| | Substantial rubber number average molecular weight | 220,000 | 220,000 |
| After hydrogenation | Name | B-1-2B | B-1-2B' |
| | Polymer structure | Star | Linear |
| | Hydrogenation ratio of polymer blocks (b2) or (b2') | 99 | 99 |
| | Mn of polymer blocks (b2) or (b2') | 113,000 | 235,000 |
| | Mn of chains (bα) | 140,000 | - |
| | Mn of block copolymer | 1,130,000 | 289,000 |
| | Average number of chains | 8.1 | - |
| | Substantial rubber number average molecular weight | 194,000 | 235,000 |

[Examples 1, 3, and 4, and Comparative Examples 1, 2, 5, 6, and 7]

According to the formulation described in Table 2, the components were added to a Brabender mixer ("PLASTOGRAPH EC 50 cc Mixer" manufactured by Brabender GmbH & Co. KG), and were melt-kneaded at a cylinder temperature of 250°C and a screw rotational speed of 100 rpm for 3 minutes to give a resin composition.

The resin composition obtained was press-molded (250°C, 3 minutes) to form a sheet (1) (3 mm thick). The sheet (1) obtained was cut to give a sample for specimen 6.4 cm in length × 1.3 cm in width × 3 mm in thickness. A 2 mm notch was formed in the sample. A specimen (1) was thus fabricated. The specimen (1) obtained was tested to

evaluate the IZOD impact strength at 23°C.

Furthermore, the resin composition obtained was press-molded (250°C, 3 minutes) to form a sheet (2) (1 mm thick). The sheet (2) obtained was cut to give a plurality of resin plates 5.5 cm in length × 5.5 cm in width × 1 mm in thickness. The plates were vacuum dried at 120°C for 3 hours. One of the dried resin plates, a stainless steel plate (5 cm × 5 cm × 1 mm), and another of the dried resin plates were placed on top of one another in this order at the center of a 6 cm × 7 cm × 2 mm metal frame, and the unit was press-molded (250°C, 3 minutes) to give a resin member-inorganic member shaped article in which the stainless steel plate was covered between the two resin plates. The resin member-inorganic member shaped article obtained was subjected to a heat shock resistance test in a temperature cycle tester tank ("NT530A" manufactured by Kusumoto Chemicals, Ltd.). One cycle consisted of heating at 140°C for 1 hour and 30 minutes, lowering the temperature to -30°C, cooling at -30°C for 1 hour and 30 minutes, and increasing the temperature to 140°C. The number of cycles was counted until a crack occurred in the shaped article. The heat shock resistance was thus evaluated.

[Example 2 and Comparative Examples 3 and 4]

According to the formulation described in Table 2, the components were added to a Brabender mixer ("PLASTOGRAPH EC 50 cc Mixer" manufactured by Brabender GmbH & Co. KG), and were melt-kneaded at a cylinder temperature of 200°C and a screw rotational speed of 100 rpm for 3 minutes to give a resin composition.

The resin composition obtained was press-molded (230°C, 3 minutes) to form a sheet (3) (3 mm thick). The sheet (3) obtained was cut to give a sample for specimen 6.4 cm in length × 1.3 cm in width × 3 mm in thickness. A 2 mm notch was formed in the sample. A specimen (2) was thus fabricated. The specimen (2) obtained was tested to evaluate the IZOD impact strength at 23°C.

Furthermore, the resin composition obtained was press-molded (230°C, 3 minutes) to form a sheet (4) (1 mm thick). The sheet (4) obtained was cut to give a plurality of resin plates 5.5 cm in length × 5.5 cm in width × 1 mm in thickness. The plates were vacuum dried at 80°C for 3 hours. One of the dried resin plates, a stainless steel plate (5 cm × 5 cm × 1 mm), and another of the dried resin plates were placed on top of one another in this order at the center of a 6 cm × 7 cm × 2 mm metal frame, and the unit was press-molded (230°C, 3 minutes) to give a resin member-inorganic member shaped article in which the stainless steel plate was covered between the two resin plates. The resin member-inorganic member shaped article obtained was subjected to a heat shock resistance test in a temperature cycle tester tank ("NT530A" manufactured by Kusumoto Chemicals, Ltd.). One cycle consisted of heating at 85°C for 1 hour, lowering the temperature to 0°C, cooling at 0°C for 1 hour, and increasing the temperature to 85°C. The number of cycles was counted until a crack occurred in the shaped article. The heat shock resistance was thus evaluated.

[Table 2]

| | | Example | | | |
|---|---|---|---|---|---|
| | | 1 | 2 | 3 | 4 |
| Formulation (parts by weight) | A-1 | 100 | 0 | 100 | 100 |
| | A-2 | 0 | 100 | 0 | 0 |
| | B-1-2A | 11 | 11 | 8 | 0 |
| | B-1-2A' | 0 | 0 | 0 | 0 |
| | B-1-2B | 0 | 0 | 0 | 8 |
| | B-1-2B' | 0 | 0 | 0 | 0 |
| | C-1 | 0 | 0 | 46 | 46 |
| | Antioxidant | 0.1 | 0.1 | 0.1 | 0.1 |
| Properties | IZOD impact strength (J/m) | 13 | 23 | 17 | 16 |
| | Heat shock resistance (cycles) | 55 | 12 | 420 | 550 |

Table 2 (continued)

| | | Comparative Example | | | |
|---|---|---|---|---|---|
| | | 1 | 2 | 3 | 4 |
| Formulation (parts by weight) | A-1 | 100 | 100 | 0 | 0 |
| | A-2 | 0 | 0 | 100 | 100 |
| | B-1-2A | 0 | 0 | 0 | 0 |
| | B-1-2A' | 11 | 0 | 11 | 0 |
| | B-1-2B | 0 | 0 | 0 | 0 |
| | B-1-2B' | 0 | 0 | 0 | 0 |
| | C-1 | 0 | 0 | 0 | 0 |
| | Antioxidant | 0.1 | 0.1 | 0.1 | 0.1 |
| Properties | IZOD impact strength (J/m) | 14 | 7 | 23 | 7 |
| | Heat shock resistance (cycles) | 22 | 33 | 8 | 1 |

Table 2 (continued)

| | | Comparative Example | | |
|---|---|---|---|---|
| | | 5 | 6 | 7 |
| Formulation (parts by weight) | A-1 | 100 | 100 | 100 |
| | A-2 | 0 | 0 | 0 |
| | B-1-2A | 0 | 0 | 0 |
| | B-1-2A' | 8 | 0 | 0 |
| | B-1-2B | 0 | 0 | 0 |
| | B-1-2B' | 0 | 8 | 0 |
| | C-1 | 46 | 46 | 46 |
| | Antioxidant | 0.1 | 0.1 | 0.1 |
| Properties | IZOD impact strength (J/m) | 16 | 15 | 13 |
| | Heat shock resistance (cycles) | 250 | 360 | 120 |

The components described in Table 2 are as follows.

·A-1: Polybutylene terephthalate resin (PBT), TORAYCON 1401X31 (manufactured by TORAY INDUSTRIES, INC.)
·A-2: Polystyrene resin (PS), G210C (manufactured by Toyo Styrene)
·C-1: Glass fibers, T127 (manufactured by Nippon Electronic Glass Co., Ltd.)
·Antioxidant: ADK STAB AO-60 (hindered phenol antioxidant, manufactured by ADEKA CORPORATION)

From Table 2, the shaped article (the resin plates) of the resin composition obtained in Example 1 that included PBT and the hydrogenated product of the multibranched block polymer specified in the present application attained enhanced IZOD impact strength as compared to the shaped article of the resin composition obtained in Comparative Example 2 that included PBT alone as the resin component, and exhibited a similar level of IZOD impact strength compared to the shaped article of the resin composition obtained in Comparative Example 1 that included PBT and the hydrogenated product of the linear block copolymer. Furthermore, the resin member-inorganic member shaped article obtained in Example 1 was shown to have excellent heat shock resistance compared to any of the resin member-inorganic member shaped article of Comparative Example 2 that had the resin member obtained from the resin composition including PBT alone as the resin component, and the resin member-inorganic member shaped article of Comparative Example 1 that had the resin member obtained from the resin composition including PBT and the hydrogenated product of the linear block copolymer.

Furthermore, the shaped article (the resin plates) of the resin composition obtained in Example 2 that included PS and the hydrogenated product of the multibranched block copolymer specified in the present application attained enhanced IZOD impact strength as compared to the shaped article of the resin composition obtained in Comparative Example 4 that included PS alone as the resin component, and exhibited a similar level of IZOD impact strength compared to the shaped article of the resin composition obtained in Comparative Example 3 that included PS and the hydrogenated product of the linear block copolymer. Furthermore, the resin member-inorganic member shaped article obtained in Example 2 was shown to have excellent heat shock resistance compared to any of the resin member-inorganic member shaped article of Comparative Example 4 that had the resin member obtained from the resin composition including PS alone as the resin component, and the resin member-inorganic member shaped article of Comparative Example 3 that had the resin member obtained from the resin composition including PS and the hydrogenated product of the linear block copolymer.

Furthermore, the shaped articles (the resin plates) of the resin compositions obtained in Examples 3 and 4 that included PBT, glass fibers, and the hydrogenated product of the multibranched block copolymer specified in the present application attained enhanced IZOD impact strength as compared to the shaped article of the resin composition obtained in Comparative Example 7 that included PBT alone as the resin component and glass fibers, and exhibited a similar level of IZOD impact strength compared to the shaped articles of the resin compositions obtained in Comparative Examples 5 and 6 that included PBT, glass fibers, and the hydrogenated product of the linear block copolymer. Furthermore, the resin member-inorganic member shaped articles obtained in Examples 3 and 4 were shown to have excellent heat shock resistance compared to any of the resin member-inorganic member shaped article of Comparative Example 7 that had the resin member obtained from the resin composition including PBT alone as the resin component and glass fibers, and the resin member-inorganic member shaped articles of Comparative Examples 5 and 6 that had the resin member obtained from the resin composition including PBT, glass fibers, and the hydrogenated product of the linear block copolymer.

Detailed reasons are unclear as to why the resin member-inorganic member shaped articles of Examples 1 to 4 that had the resin member obtained from the resin composition including the hydrogenated multibranched block copolymer (B-1-1) outperformed in heat shock resistance the resin member-inorganic member shaped articles that had the resin member obtained from the resin composition including the hydrogenated linear block copolymer (B-1-1’). It is, however, probable that the hydrogenated multibranched block copolymer (B-1-1) was dispersed more finely in the resin composition than the hydrogenated linear block copolymer (hereinafter, B-1-1’), and relaxed the stress generated during the heat shock resistance test more efficiently.

Industrial Applicability

The resin composition of the present invention that includes at least one selected from the group consisting of polybutylene terephthalate resins, polystyrene resins, and polyphenylene sulfide resins has excellent heat shock resistance, and may favorably find useful applications as shaped articles of the resin composition, such as, for example, electric/electronic parts, and parts for automobiles including electric vehicles.

## Claims

**1.** A resin composition comprising:

100 parts by mass of a thermoplastic resin (A); and
1 to 100 parts by mass of a multibranched block copolymer or a hydrogenated product thereof (B) wherein the multibranched block copolymer contains a polymer block (b1) including aromatic vinyl compound-derived structural units, and a polymer block (b2) including conjugated diene compound-derived structural units, wherein

the thermoplastic resin (A) comprises:
at least one selected from the group consisting of polybutylene terephthalate resins (A-1), polystyrene resins (A-2), and polyphenylene sulfide resins (A-3), and
the multibranched block copolymer or the hydrogenated product thereof (B) comprises at least one selected from the group consisting of:

star block copolymers or hydrogenated products thereof (B-1) wherein the star block copolymers include 3 or more chains (bα) each containing a polymer block (b1) including aromatic vinyl compound-derived structural units, and a polymer block (b2) including conjugated diene compound-derived structural units, and one nucleus (bβ) derived from a coupling agent; and
graft block copolymers or hydrogenated products thereof (B-2) wherein the graft block copolymers include a main chain (bγ) including conjugated diene compound-derived structural units, and a side chain (bδ) containing a polymer block (b1) including aromatic vinyl compound-derived structural units, and a polymer block (b2) including conjugated diene compound-derived structural units.

**2.** The resin composition according to claim 1, wherein the thermoplastic resin (A) comprises a polybutylene terephthalate resin (A-1).

**3.** The resin composition according to claim 1, wherein the thermoplastic resin (A) comprises a polystyrene resin (A-2).

**4.** The resin composition according to claim 1, wherein the thermoplastic resin (A) comprises a polyphenylene sulfide resin (A-3).

**5.** The resin composition according to any one of claims 1 to 4, wherein the conjugated diene compound-derived structural units in the multibranched block copolymer or the hydrogenated product thereof (B) comprise isoprene-derived units.

**6.** The resin composition according to any one of claims 1 to 5, wherein the multibranched block copolymer or the hydrogenated product thereof (B) has a number average molecular weight of 700,000 or more as measured by gel permeation chromatography relative to standard polystyrenes.

**7.** The resin composition according to any one of claims 1 to 6, wherein the multibranched block copolymer or the hydrogenated product thereof (B) is at least one hydrogenated multibranched block copolymer (B2) selected from the group consisting of:

hydrogenated star block copolymers (B-1-2) obtained from star block copolymers including 3 or more chains (bα) each containing a polymer block (b1) including aromatic vinyl compound-derived structural units, and a polymer block (b2) including conjugated diene compound-derived structural units, and one nucleus (bβ) derived from a coupling agent; and
hydrogenated graft block copolymers (B-2-2) obtained from graft block copolymers including a main chain (bγ) including conjugated diene compound-derived structural units, and a side chain (bδ) containing a polymer block (b1) including aromatic vinyl compound-derived structural units, and a polymer block (b2) including conjugated diene compound-derived structural units, and
the hydrogenated multibranched block copolymer is such that the multibranched block copolymer is hydrogenated at a hydrogenation ratio of 80 mol% or more of carbon-carbon double bonds in the conjugated diene compound-derived structural units present in the multibranched block copolymer.

**8.** The resin composition according to claim 7, wherein the multibranched block copolymer or the hydrogenated product thereof (B) is a hydrogenated star block copolymer (B-1-2) obtained from a star block copolymer including 3 or more chains (bα) each containing a polymer block (b1) including aromatic vinyl compound-derived structural units, and a polymer block (b2) including conjugated diene compound-derived structural units, and one nucleus (bβ) derived from a coupling agent, and
the hydrogenated star block copolymer is such that the star block copolymer is hydrogenated at a hydrogenation ratio of 80 mol% or more of carbon-carbon double bonds in the conjugated diene compound-derived structural units present in the star block copolymer.

**9.** The resin composition according to claim 1, wherein the multibranched block copolymer or the hydrogenated product thereof (B) comprises a star block copolymer or a hydrogenated product thereof (B-1), and

the nucleus (bβ) contained in the star block copolymer or the hydrogenated product thereof (B-1) is derived from divinylbenzene.

**10.** The resin composition according to any one of claims 1 to 9, further comprising:
1 to 200 parts by mass of an inorganic filler (C) with respect to 100 parts by mass of the thermoplastic resin (A).

**11.** A shaped article obtained from the resin composition described in any one of claims 1 to 10.

**12.** The shaped article according to claim 11, which comprises an inorganic member formed of at least one selected from the group consisting of metals and non-metallic inorganic solids, and a resin member formed from the resin composition described in any one of claims 1 to 10 and covering at least part of a surface of the inorganic member.

## INTERNATIONAL SEARCH REPORT

International application No. **PCT/JP2021/034941**

**A. CLASSIFICATION OF SUBJECT MATTER**

***C08F 297/04***(2006.01)i; ***C08L 53/02***(2006.01)i; ***C08L 101/00***(2006.01)i; ***C08K 3/013***(2018.01)i
FI: C08L101/00; C08L53/02; C08K3/013; C08F297/04

According to International Patent Classification (IPC) or to both national classification and IPC

**B. FIELDS SEARCHED**

Minimum documentation searched (classification system followed by classification symbols)

C08F251/00-283/00, 283/02-289/00, 291/00-297/08; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 5-170844 A (JAPAN SYNTHETIC RUBBER CO LTD) 09 July 1993 (1993-07-09) claims, paragraphs [0006], [0014], [0017], [0022], [0024], examples 11, 23 | 1-12 |
| X | JP 2-651 A (ASAHI CHEM IND CO LTD) 05 January 1990 (1990-01-05) claims, page 4, upper right column, line 15, page 5, lower left column, lines 9-13, page 6, lower right column, lines 10-15, page 8, lower right column, line 16 to page 9, upper left column, line 10, page 9, upper left column, line 11 to upper right column, line 13, page 9, lower left column, lines 7-15, examples, page 10, table 1, page 12, table 5 (reference comparative examples 6-9, reference examples 10-13) | 1-12 |
| X | JP 2015-203071 A (DENKI KAGAKU KOGYO KK) 16 November 2015 (2015-11-16) claims, paragraphs [0009], [0015]-[0016], [0022], [0030], [0050], examples 13, 14, table 4 | 1, 3, 5-6, 9-12 |
| X | JP 2009-503218 A (SOCIETE DE TECHNOLOGIE MICHELIN, MICHELIN RECHERCHE ET TECHNIQUE SA) 29 January 2009 (2009-01-29) claims, paragraphs [0005]-[0008] , [0010], [0017]-[0019] | 1-6, 10-12 |
| P, A | WO 2021/132286 A1 (KURARAY CO) 01 July 2021 (2021-07-01) claims | 1-12 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/034941**

| Patent document cited in search report | Publication date (day/month/year) | Patent family member(s) | Publication date (day/month/year) |
|---|---|---|---|
| JP 5-170844 A | 09 July 1993 | (Family: none) | |
| JP 2-651 A | 05 January 1990 | (Family: none) | |
| JP 2015-203071 A | 16 November 2015 | (Family: none) | |
| JP 2009-503218 A | 29 January 2009 | US 2010/0154945 A1<br>claims, paragraphs [0020]-[0039], [0048], [0084]-[0095]<br>WO 2007/014998 A1<br>EP 1915408 A1<br>CN 101233163 A | |
| WO 2021/132286 A1 | 01 July 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009155447 A
- JP 2000103964 A